# EUROPEAN PATENT SPECIFICATION

(11) **EP 4 385 314 B1**
(45) Date of publication and mention of the grant of the patent: **23.07.2025**
(21) Application number: 23216289.1
(22) Date of filing: 13.12.2023
(51) Int. Cl.: A01F 15/10, A01D 90/04

(54) **CUTTER DEVICE FOR AN AGRICULTURAL HARVESTER**
SCHNEIDEVORRICHTUNG FÜR EINE LANDWIRTSCHAFTLICHE ERNTEMASCHINE
DISPOSITIF DE COUPE POUR UNE MOISSONNEUSE AGRICOLE

(30) Priority: 14.12.2022 GB 202218840; 01.06.2023 GB 202308217; 09.06.2023 GB 202308649
(43) Date of publication of application: 19.06.2024
(73) Proprietor: Kuhn-Geldrop B.V., 5667 KP Geldrop (NL)
(72) Inventor: BAX, Roy, 5595 AV Leende (NL); VAN GOG, Johannes, 6027 RP Soerendonk (NL)
(74) Representative: Murgitroyd & Company

(56) References cited:
- EP-A1- 3 732 953
- EP-A1- 3 975 692
- US-A1- 2016 029 567

## Description

The present invention relates to a cutter device for an agricultural harvester, for example a round baler, a square baler or a loading waggon.

The invention also relates to an agricultural harvester comprising a crop pickup device, a crop receiving station and a cutter device, a method of detaching a replaceable knife from a cutter device of an agricultural harvester, and a knife for a cutter device of an agricultural harvester.

The agricultural harvester may for example be a round baler of the fixed chamber or variable chamber type, examples of which are described in EP 3157321 and EP 3021659. In the case of a round baler the crop receiving station may comprise the baling chamber in which crop material is rotated and pressed to make a round bale. Alternatively, the agricultural harvester may be a square baler, an example of which is described in EP 3038452 and the crop receiving station may in that case be the pre-chamber in which crop material is collected before being transferred to the baling chamber where it is compressed by a reciprocating plunger to form a square bale. Alternatively, the agricultural harvester may be a loading waggon, an example of which is described in DE 102013007304, in which the crop receiving station is a loading platform on which the crop material is gathered.

The purpose of the cutter device is to receive crop material from the pickup device and transport the crop material along the feed path to the crop receiving station. The cutter device is configured to cut the crop material when required for improved handling. For example, if the crop material is grass the cutter device may be configured to cut the stalks of the grass into shorter lengths. Cutting of the crop material is optional and the cutter device may be configured for either cutting or non-cutting operation.

Typically, the cutter device of an agricultural harvester comprises a rotating rotor consisting of a tube that carries a plurality of radially-extending tines. The tines of the rotating rotor carry the crop material forward along a feed path that is defined in part by a bottom plate. A plurality of knives extend upwards through slots in the bottom plate into the feed path of the crop material. The knives cooperate with the tines of the rotating rotor to cut the crop material. The knives may also optionally be withdrawn from the feed path and placed in a non-cutting position below the bottom plate so that the crop material is transferred by the rotor along the feed path without being cut. Optionally, some of the knives may be placed in the cutting position while others of the knives are in the non-cutting position or are allowed to return to the non-cutting position, to adjust the cut length of the crop material. A retainer device, for example comprising a comb, may be provided to remove crop material from the tines of the rotating rotor. The knives may be provided with an overload protection mechanism, that allows the knives to be pressed downwards against a resilient element from the cutting position towards the non-cutting position, for example when an obstacle such as a stone passes through the feed path. An example of a cutter device is described in WO 2011144349 A1. The knives may be provided with a control mechanism as to hold one or more knives in the cutting position. The position control mechanism can be provided with a selection device as to select a limited number of knives that will be brought from the non-cutting position into the cutting position. An example is for instance described in EP2110014A1.

The disadvantage of such a selection mechanism is that the knives that are unselected will stay in the non-cutting position independent from the position of the cutting or non-cutting position of the selected knives. During the operation of the harvester especially during longer periods of not using one or more knives, the slots in the bottom plate of the non-selected knives can collect dirt and to such an extent that, if the knives are reselected to be brought into the cutting position, the movement of these reselected knives will be obstructed by the crop and dirt in the slots and the reselected knives will not be able to reach the cutting position because of this dirt and crop, and due to that obstruction the overload protection will be activated and the knives will never reach the cutting position again.

Other cutter devices for an agricultural harvester such as a baler are known from EP 3 732 953 A1 or US 2016/029567 A1.

The advantage of the cleaning system of the invention is that not only the slots and the knives that are selected are cleaned when they are moved in and out of cutting position but also the cooperating slots of the knives that are deselected from coming into cutting position will be cleaned during this operation.

Of course with the conventional selection devices to clean all knife slots can be performed by selecting all knives, moving them all IN and then OUT, selecting the knife set again and moving these knives IN again; this time consuming operation.

It is especially advantageous when the harvester is provided with a controller that regularly controls the cutter control device to move from the IN to the OUT of cutting position and reverse.

It is an object of the present invention to provide a cutter device for an agricultural harvester that overcomes or mitigates one or more of the aforesaid technical problems. According to one aspect of the invention there is provided a cutter device according to claim 1. The invention helps to ensure that the cutting knives, and the parts of the cutter device located immediately adjacent the cutting knives especially the slots in the bottom of the cutting unit, are cleaned during movement from knives from the non-cutting position towards the cutting position. This helps the cutter device to continue to operate for longer periods of time, for example openings through which the cutting knives move during a cleaning process.

According to another aspect there is provided a cutter device for an agricultural harvester.

The cutter device can include a rotor with a plurality of tines, wherein the rotor is rotatable to transfer an agricultural crop along a feed path.

The cutter device can include a knife, wherein the position of the knife is adjustable. P308829.EP.01_cc

The cutter device can include a bottom plate located beneath the rotor. The feed path can be located between the rotor and the bottom plate. The bottom plate can include an opening through which the knife extends in a cutting position.

The cutter device can include a control mechanism. The control mechanism can include a control element that is moveable between at least a primary and a secondary position. The control element can be arranged to control movement of the knife, for example between: a first position in which the knife is in a cutting position in the feed path; a second position in which the knife is retracted from the feed path into a non-cutting position, and a third position, in which the knife is located at an intermediate position between the cutting position and the non-cutting position.

The control mechanism can be arranged such that, in a condition wherein the control element is in the secondary position, the knife is in, or may freely move to, the second position of the knife.

The control mechanism can include a selection mechanism that is arranged to select between the first and second selection configurations.

In the first selection configuration, in response to the control element being actuated to move from the secondary position to the primary position, the control mechanism can be arranged to move the knife from the second position to the first position.

In the second selection configuration, in response to the control element being actuated, the control mechanism can be arranged to move the knife from the second position to the third position during movement of the control element from the secondary position to the primary position. In a condition wherein the control element reaches the primary position, the knife can be freely movable to return to the second position of the knife. At the intermediate position, the knife can be either temporarily held in position in the opening due to e.g. accumulated dirt and/or crop material adjacent the opening and is subsequently forced to the non-cutting position by crop material moving along the flow path, or is freely movable to the non-cutting position due to gravity acting on the knife.

The intermediate position of the knife can correspond to a knife position that is approximately midway between the cutting position and the non-cutting position.

Movement of the knife to the intermediate position in the second selection configuration can comprise 20%-75% of the total range of movement from the non-cutting position to the cutting position.

Dirt comes into the opening when the machine is operated with all or a part of the knives out. When this dirt is not regularly pressed out of the opening it gets stuck, so the knives are not able to press it out anymore. The state of the art is that unselected knives cannot be put into working position when non-selected. In the state of the art cutting units cleaning of the openings is only possible by first selecting all knives to be put into the cutting position, pressing all knives in and then deselect the knives that should be deselected.

The cutter device can include a positioning device arranged to control movement of the knife. The control mechanism can be arranged to control movement of the positioning device.

In response to the selection mechanism selecting the first selection configuration, the positioning device can be configured to engage the knife and the positioning device can be adjustable, by the control mechanism, between a first position in which the positioning device positions the knife in the cutting position and a second position in which the positioning device positions the knife in the non-cutting position.

The positioning device can be configured to engage the knife and prevent significant movement of the knife independently of the positioning device when the positioning device can be in the first position, and at intermediate positions between the first position and the second position, in response to the selection mechanism selecting the first selection configuration.

The positioning device can be adjustable, by the control mechanism, to a third position in which the positioning device disengages the knife at least in the direction of the cutting position.

The positioning device and the knife can have complementary engaging formations configured to limit relative movement between the positioning device and the knife in a tangential direction relative to the pivot axis of the knife, and to permit relative movement between the positioning device and the knife in a radial direction relative to the pivot axis of the knife. The complementary engaging formations can be configured to permit relative movement between the positioning device and the knife in a radial direction relative to the pivot axis of the knife. Optionally the engaging formations can comprise a rearwards-facing slot that opens through a rear edge of the knife. The engaging formations can comprise an engaging element provided on the positioning device that engages the slot. The engaging element provided on the positioning device may for example comprise a pin.

When wherein the control element can be connected to the positioning device. An actuator can be connected to the control element. The actuator can be configured to move the control element between the primary position and the secondary position. Movement of the control element between the primary position and the secondary position adjusts the position of the positioning device, which in turn adjusts the position of the knife. Moving the control element towards the primary position can cause the knife to move towards the cutting position. Moving the control element towards the secondary position can cause the knife to move towards the non-cutting position.

The control mechanism can include a connecting element. The connecting element can be connected to the positioning device.

The connecting element can comprise a resilient connecting element. The resilient connecting element can be configured to enable movement of the positioning device relative to the control element by deformation of the resilient element. The advantage of this arrangement is that if the dirt adjacent the opening is compacted so that the knife is unable to move immediately to the non-cutting position, if the knife can be subsequently loaded, for example by crop material encountering the knife and/or a stone in the crop material, the resilient connecting element will bend thereby preventing damage to the control mechanism.

The resilient connecting element can comprise a spring, such as a kink spring, a coil spring or a flat spring.

In some embodiments, in response to the control element being actuated to move from the secondary position to the primary position, thereby moving the knife from the second position to the third position, the resilient connection element can be arranged to apply a constant force to the positioning member throughout movement of the knife from the second position to the third position.

In some embodiments, in response to the control element being actuated to move from the secondary position to the primary position, thereby moving the knife from the second position to the third position, the resilient connection element is arranged to apply a force to the positioning device, throughout movement of the knife from the second position to the third position, that is greater than or equal to the force applied by the resilient connection element to the positioning device immediately after the control element moves from the second position.

The selection device can include a selection element. The selection element can be arranged to select between the first selection configuration in which the knife is selected and the second selection configuration in which the knife is deselected. The selection mechanism can include a selection control, which can be arranged to actuate the selection element to move between the first selection configuration and the second selection configuration. For example, the selection control can be arranged to move the selection element between the first operational position and the second operational position.

In some embodiments, the selection control can be arranged to selectively block the selection element from selecting the second selection configuration.

The selection control can include a first part for selecting the first selection configuration and a second part for selecting the second selection configuration.

The selection control can include at least one engagement member mounted on an axle, wherein rotation of the axle rotates the engagement member, thereby causing the engagement member to selectively engage the selection element. Optionally, the axle can be arranged parallel to the control element. In some embodiments, in a condition wherein the engagement member does not engage the selection element, the selection element is not blocked from selecting the second configuration.

The engagement member can comprise at least one cam. The cam can include a first part for selecting the first selection configuration and a second part for selecting the second selection configuration.

The at least one engagement member can comprise at least one elongate member, such as a shaft, that protrudes radially outwards from the axle. The at least one engagement member can comprise a plurality of shafts mounted on the axle. Each shaft can protrude radially outwards from the axle, for example in a cruciform arrangement. At least one shaft can be shorter than the other shaft(s), and is arranged not to engage the selection element in at least one operational condition, thereby enabling the selection element to flip over, for example if biassed to do so, as the control element moves from the secondary position to the primary position.

The selection element can be attached to the resilient element and the control element.

The selection element can be arranged to selectively engage the control element. The selection device can be arranged to selectively move the selection element into and out of engagement with the control element.

The positioning device can be attached to a positioning device support by a first pivot having a first pivot axis, and can be arranged to pivot relative to the positioning device support. The control element can be attached to a control element support by a second pivot having a second pivot axis, and can be arranged to pivot relative to the control element support.

The first pivot axis can be arranged transversely to the direction of travel of the cutter device in normal use. The second pivot axis can be arranged transversely to the direction of travel of the cutter device in normal use. The first pivot axis can be located above the second pivot axis. The second pivot axis can be arranged parallel to the first pivot axis.

The first pivot can be located towards an end of the positioning device, for example at an end that can be opposite to an end of the positioning device that engages the knife.

The second pivot axis can be offset from the first pivot axis. Thus the first and second pivot axes are not co-axial. The first pivot axis can be positioned more forwardly than the second pivot axis. The first pivot axis can be positioned vertically higher than the second pivot axis.

The control element can comprise a bar arranged transversely to the direction of travel of the cutter device in normal use. At least one arm can protrude radially outwards from the bar. The second pivot can be located on the at least one arm. The bar can be arranged parallel with the second pivot axis.

A linkage comprising the resilient connecting element and the selection element can connect the positioning device to the control element. The resilient connecting element can be pivotally attached to the positioning device by a third pivot having a third pivot axis. The resilient connecting element can be pivotally attached to the selection element by a fourth pivot having a fourth pivot axis. The selection element can be pivotally attached to the control element by a fifth pivot having a fifth pivot axis. The resilient connecting element can be elongate, for example can comprise an elongate spring. The third pivot can be located towards a first end of the resilient connecting element. The fourth pivot can be located towards a second end of the resilient connecting element. The selection element can be elongate. The fourth pivot can be located towards a first end of the selection element. The fifth pivot can be located in a central portion of the selection element.

An angle A is defined at the fourth pivot between a first notional line connecting a centre of the fourth pivot with a centre of the third pivot and a second notional line connecting the centre of the fourth pivot with a centre of the fifth pivot, the angle A is located on a side of the resilient connecting element and the selection element that is opposite to the side on which the control element is located, wherein the angle A is adjustable as the resilient connecting element and the selection element pivot relative to one another in response to movement of the control element between the primary and secondary positions.

For the first selection configuration, the angle A can be less than 180 degrees, throughout the movement of the control element or control bar from the secondary position to the primary position.

For the second selection configuration, the angle A can be less than 180 degrees in a condition wherein the control element or control bar is located at the secondary position. The angle A can equal 180 degrees in a condition wherein the control element or control bar is located at at least one position that is intermediate between the primary and secondary positions. The angle A can be greater than 180 degrees in a condition wherein the control element or control bar is located at the primary position. In the second configuration, the selection element flips its orientation, thereby increasing the angle A to greater than 180 degrees.

In some embodiments, the angle A can be less than 180 degrees in a condition wherein the control element is located at the secondary position, and the angle A can be greater than 180 degrees in a condition wherein the control element is located at the primary position.

In some embodiments, for the first selection configuration, the selection control can be arranged to block the selection element from pivoting about the fifth axis, as the control element moves from the secondary position to the primary position, thereby enabling the knife to move to the cutting position and to be supported in the cutting position.

In some embodiments, for the second selection configuration, the selection control is arranged to allow the selection element to rotate about the fifth axis, as the control element moves from the secondary position to the primary position, thereby enabling the knife to return to its non-cutting position.

The agricultural harvester can comprise a baler, and preferably a round baler. Utilizing the cutter device on a round baler provides significant advantages. For example, a round baler can be arranged to bind the bale during a baling operation, and during the binding process there can be no intake of crop material so there can be an opportunity to clean the knives without loss of time or the risk of material being uncut during the cleaning process.

The baler can include a tailgate.

The baler can include a first hydraulic cylinder for actuating the control element.

The baler can include a second hydraulic cylinder for operating the tailgate.

The first and second hydraulic cylinders can be arranged parallel to one another. This helps to ensure that the control element is operated in parallel and/or at the same time as, the opening of the tailgate.

The round baler can include a binding device. When operated, the binding device is arranged to supply binding material into the baling chamber to bind the bale.

The cutter device can include a controller, such as an electronic controller, that is arranged to operate the agricultural harvester. For example, the controller can be arranged to operate the first hydraulic cylinder to operate the control mechanism and move the knife. For example, the controller can be arranged to actuate the control element to cause the knife to move to the cutting position. The controller can be arranged to actuate the control element to cause the knife to move to the intermediate position. The controller can be arranged to actuate the control element to cause the knife to move to the non-cutting position. The controller can be arranged to operate the second hydraulic cylinder to open and close the tailgate. The controller can be arranged to operate the selection mechanism. The controller can be arranged to operate the binding device.

Moving the knife to undertake a cleaning operation can be initiated by the controller in response to the controller determining that at least one baler operating condition has been met. For example, the controller can be arranged to initiate a knife cleaning operation in response to sensing or determining that no crop material is transported by the cutting rotor (e.g. when the harvester is located on a headland). For embodiments wherein the cutter device is mounted on a round baler, moving the knife to undertake a cleaning operation can be initiated by sensing or determining that the round baler is binding a bale in the baling chamber and / or detecting or determining that the bale has been ejected from the baling chamber, since during those operational conditions there can be no intake of crop material.

The controller can be arranged to actuate the control element and/or selection mechanism in response to the tailgate opening.

The controller can be arranged to actuate the control element and/or selection mechanism in response to the controller determining that the bale size has reached a threshold size. Optionally, the controller can be arranged to actuate the control element and/or selection mechanism in response to signals received from a sensor arranged to monitor bale size.

The controller can be arranged to actuate the control element and/or selection mechanism in response to the controller determining that no crop material is being transported by the cutting rotor towards the baling chamber. Optionally, the controller can be arranged to actuate the control element and/or selection mechanism in response to signals received from a sensor arranged to monitor the flow rate of crop material moving towards the baling chamber.

The controller can be arranged to actuate the control element and/or selection mechanism in response to the controller determining that the tailgate has opened and/or closed. The controller can be arranged to receive signals from a sensor arranged to monitor the operational condition of the tailgate, thereby detecting an open / closed state. For example, the baler can include a sensor, such as a limit switch adjacent the tailgate, and the controller can be arranged to actuate the control element in response to signals received from the sensor adjacent the tailgate.

The controller can be arranged to actuate the control element and/or selection mechanism in response to the controller determining that the binding device is operational.

The controller can be arranged to actuate the control element and/or selection mechanism in response to the controller determining that the bale has been released from the bale chamber.

In each of these instances, no crop material is transported into the bale chamber, which provides an opportunity to undertake a cleaning process to clean the knife and the opening.

For embodiments including a plurality of knives, typically each knife can have a respective positioning device, a respective resilient connecting element, a respective selection element and a respective selection control. Optionally, each selection control can be mounted on the axle. Optionally, the control element can be arranged to adjust the position of each positioning device, and hence each knife, according to the operational condition of the respective selection element.

Typically, the cutter device includes around 10 to 40 knives, each mounted in a respective opening in the bottom plate, and each individually controllable by the control mechanism in a similar fashion to the knife described above.

For example, the cutter device can include a second knife, wherein the position of the second knife is adjustable.

The bottom plate can include a second opening through which the second knife extends in a cutting position.

The control element can be arranged to control movement of the second knife between: a first position in which the second knife is in a cutting position in the feed path; a second position in which the second knife can be retracted from the feed path into a non-cutting position; and a third position, in which the second knife can be located at an intermediate position between the cutting position and the non-cutting position.

The selection mechanism can be arranged to select between first and second selection configurations for the second knife.

In the first selection configuration, in response to the control element being actuated to move from the secondary position to the primary position, the control mechanism is arranged to move the second knife from the second position to the first position.

In the second selection configuration, in response to the control element being actuated, the control mechanism is arranged to move the second knife from the second position to the third position during movement of the control element from the secondary position to the primary position, and in a condition wherein the control element reaches the primary position, the second knife is freely movable to return to the second position of the second knife.

At the intermediate position, the second knife can be either temporarily held in position in the opening due to accumulated dirt and/or crop material adjacent the opening and can be subsequently forced to the non-cutting position by crop material moving along the flow path, or can be freely movable to the non-cutting position due to gravity acting on the second knife.

The cutter device can include a second positioning device arranged to control movement of the second knife, wherein the control mechanism can be arranged to control operation of the second positioning device.

The cutter device can include a second selection element that can be arranged to select between a first selection configuration in which the second knife is selected and a second selection configuration in which the second knife is non-selected.

The selection mechanism can include a second selection control, which can be arranged to actuate the second selection element to select between the first and second selection configurations.

The second selection control can be mounted on the axle.

The cutter device can include a second resilient connecting element that can be configured to enable movement of the second positioning device relative to the control element by deformation of the second resilient connecting element.

The cutter device can include at least one: further knife, wherein the position of the further knife can be adjustable, for example similarly to the knife and/or the second knife.

The bottom plate can include a further opening through which the further knife extends in a cutting position.

The cutter device can include a further positioning device arranged to control movement of the further knife, wherein the control mechanism can be arranged to control operation of the further positioning device.

The cutter device can include a further selection element that can be arranged to select between a first selection configuration in which the further knife can be selected and a second selection configuration in which the further knife can be non-selected.

The selection mechanism can include a further selection control, which can be arranged to actuate the further selection element to select between the first and second selection configurations.

The further selection control can be mounted on the axle.

The cutter device can include a further resilient connecting element that can be configured to enable movement of the further positioning device relative to the control element by deformation of the further resilient connecting element.

Embodiments of the invention will now be described by way of example with reference to the accompanying drawings, in which:
Figure 1 is a schematic side section of a variable chamber round baler, including a cutter device according to the invention;
Figure 2 is an isometric view of a pickup and feed unit for use with the variable chamber round baler of Figure 1;
Figure 3 is a side view of a cutter device according to a first embodiment of the invention, showing a knife in a cutting position and a non-cutting position, and showing a positioning device in a first position, a second position and a third position;
Figure 4 is a side view of a knife mechanism from the cutter device of Figure 3, showing the positioning device in the third position and showing the knife in the non-cutting position and a detaching position;
Figure 5 is a side view of the cutter device of Figure 3, showing the knife in the cutting position and displaced towards the non-cutting position in response to an obstacle moving along a feed path;
Figure 6 is a side view of the knife mechanism of Figure 4, showing the knife in the cutting position and the non-cutting position, and showing the positioning device and a selection control in first and second positions;
Figure 7 is an isometric view of a base structure of the cutter device of Figure 3, showing a first set of knives in the cutting position and a second set of knives in the non-cutting position, together with an attached knife detachment handle;
Figure 8 is a side view of a knife from the cutting device of Figure 3;
Figure 9 is a side view of the knife mechanism of Figure 4, showing the knife in the cutting position and the non-cutting position, the positioning device in the first position and the third position, and the selection control in the first position;
Figure 10 is a side view of the knife mechanism of Figure 4, showing the knife in the non-cutting position, the positioning device in the second position and the third position, and the control element in an intermediate position in which the positioning element is catching the knife;
Figure 11 is a side view of the knife mechanism of Figure 4, showing the knife in the non-cutting position and in an intermediate position between the cutting position and the non-cutting position, and showing the positioning device in the third position and an intermediate position in which the selection lever is tipping over to de-select the knife;
Figure 12 is a side view of the knife mechanism of Figure 4, showing the knife in the non-cutting position and in an intermediate position between the cutting position and the non-cutting position, and showing the positioning device in the second position and an intermediate position where the selection lever is tipping over to de-select the knife;
Figure 13 is a side view of the knife mechanism of Figure 4, showing the knife in the non-cutting position, and showing the control element in the secondary position while the selection device has been activated to de-select the knife, and also showing the control element in the primary position whereby the selection lever is fully tipped over so that the knife is de-selected;
Figure 14 is a schematic side section of a variable chamber round baler similar to figure 1, and additionally showing diagrammatically a control system for the baler;
Figure 15 is a schematic side section of a variable chamber round baler similar to figure 1, with the tailgate open;
Figure 16 is a side view of a cutter device according to a second embodiment of the invention, which can be used in variable chamber round balers, for example as shown in Figures 1, 14 and 15. Figure 16 shows a knife in a non-cutting position, and a control element in a secondary position;
Figure 17 is a side view of the cutter device of Figure 16, showing a selection element in a first operation condition, the knife in a cutting position and the control element a primary position; and
Figure 18 is a side view of the cutter device of Figure 16, showing the selection element in a second operational condition, the knife in a non-cutting position and the control element in the primary position.

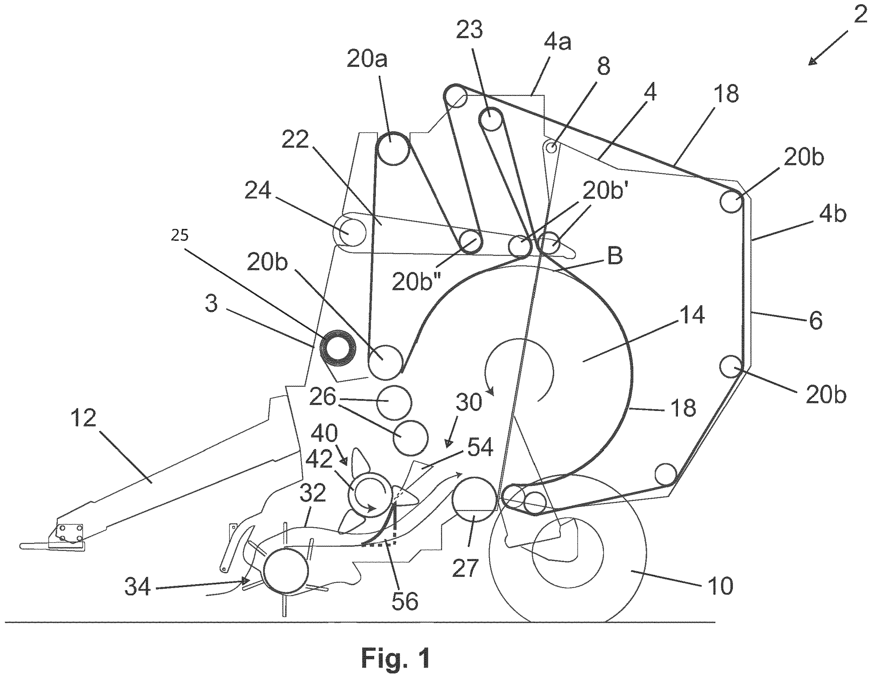

As previously noted, the present invention relates to a cutter device for an agricultural harvester, for example a round baler, a square baler or a loading waggon. In Figure 1 of the accompanying drawings the cutter device is part of a variable chamber round baler. It should be noted that the cutter device may alternatively comprise part of another type of baler, for example a fixed chamber round baler or a square baler, or any other type of agricultural harvester, for example a loading wagon.

The variable chamber round baler 2 shown in Figure 1 comprises a frame 3 and a housing 4 comprising a fixed part 4a and an openable rear part 4b, wherein the rear part 4b comprises a tailgate 6 that can pivot open about a pivot 8 in the upper part of the housing 4 to release a completed bale from the baler. The frame 3 and the fixed front part 4a of the housing 4 optionally comprise a unitary structure. The baler 2 is mounted on wheels 10 and has a drawbar 12 allowing it to be drawn by an agricultural vehicle such as a tractor. The baler 2 is configured to be driven from the power take off unit of the tractor (not shown).

The baler housing 4 encloses a baling chamber 14 within which a round (cylindrical) bale B can be formed from bale material, for example agricultural crop material. A bale forming zone is provided within the baling chamber 14, the shape of the bale forming zone being defined the side walls of the housing 4 and by one or more endless belts 18 that pass around a set of rollers 20a, 20b. At least one of the rollers is a drive roller 20a that is driven via the power take-off unit and drives the belts 18 causing them to rotate around the rollers 20a, 20b. The other rollers are undriven idler rollers 20b that rotate with the belts 18.

Two of the idler rollers 20b comprise tensioning rollers 20b', which are mounted on a tensioning arm 22. An intermediate roller 23 is located in the belt run between the movable rollers 20b'. The intermediate roller 23 guides the belt 18 as it runs from the rear part of the baling chamber 14 around the movable rollers 20b' and the intermediate roller 23, and back to the front part of the baling chamber 14. A third roller 20b" mounted on the arm 22 takes up any slack and effectively tensions the belts 18 as the arm 22 moves. The tensioning arm 22 can be pivoted about a pivot axis 24 to accommodate a change in the size of the bale forming zone defined by the belts 18 within the baling chamber 14. A belt tensioner (not shown), for example a hydraulic or electric actuator, is connected between the tensioning arm 22 and the frame 3 and is operable to adjust the pressure on the tensioning arm 22 and the tension in the belts 18. This affects the degree of compression of the bale material and the density of the bale B.

Optionally, the baling chamber 14 is defined in part by one or more press rollers 26 and/or a starter roller 27, which do not engage the belts 18. The press rollers 26 and the starter roller 27 are located on opposite sides of a feed opening 30 through which bale material is fed into the baling chamber 14. The press rollers 26 and/or the starter roller 27 may optionally be driven rollers.

The baler includes a pick-up mechanism 34 for picking up bale material from the ground and feeding it into the baling chamber 14 along a feed path 32. A cutter device 40 comprising a rotating rotor 42 is provided to drive the bale material along the feed path 32 and optionally to cut the bale material before it enters the baling chamber.

The bale material is circulated within the baling chamber 14 and compressed by the rotating belts 18 and the rollers 20a, 20b, 26, 27 to form a round bale B. When the bale B has been formed and has reached the desired diameter it is bound with a suitable binding material, typically twine, net or film, which may be fed into the baling chamber 14 from a binding device 25 and wrapped around the bale B. The binding material may for example be fed into the baling chamber 14 between the lowermost idler roller 20b in the front part 4a of the housing and the upper press roller 26. The bound bale can be ejected from the baling chamber 14 onto the ground by opening the tailgate 6.

Except as described below, all the aforesaid features are conventional and they will not therefore be described in further detail.

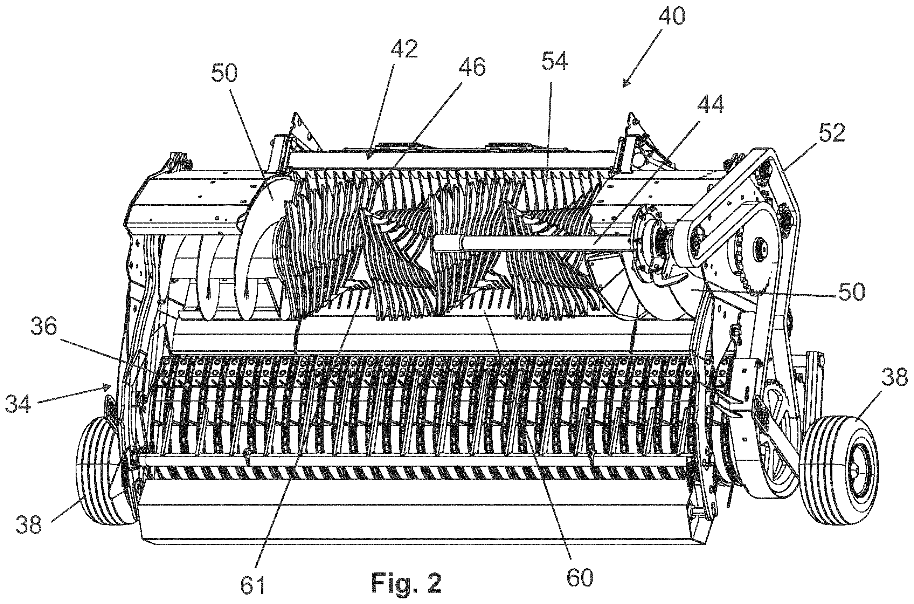

The pick-up mechanism 34 and the cutter device 40 are shown in more detail in Figure 2. The pick-up mechanism 34 is conventional and comprises a plurality of pick-up tines 36 that rotate to pick up the crop material from the ground and feed it to the cutter device 40. The pick-up mechanism 34 is supported on the ground by a pair of wheels 38 that are adjustable to adjust the height of the pick-up mechanism 34 above the ground.

The cutter device 40 is positioned above and behind the pick-up mechanism 34 and is configured to drive the bale material along the feed path towards the baling chamber 14.

The cutter device 40 is also operable to cut the bale material if required before it enters the baling chamber 14.

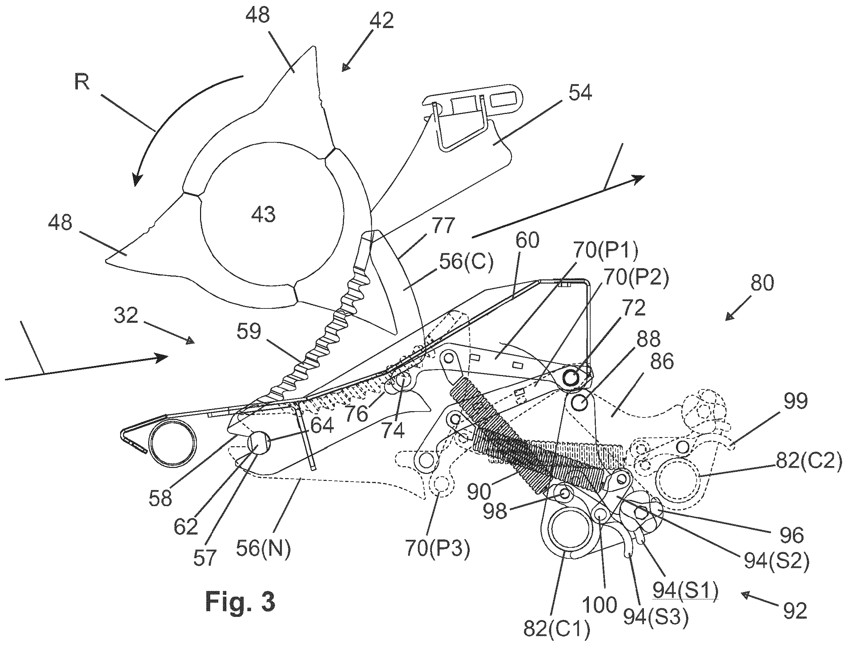

The cutter device 40 includes a rotating rotor 42 comprising a tube 43 and a plurality of tine plates 46 that are mounted on the tube 43. As depicted in figure 3, in this embodiment each tine plate 46 comprises three tines 48 that are spaced evenly around the axis of the tube 43, although the number and spacing of the tines may be different. Also in this embodiment the tine plates 46 are preferably attached to the tube 43 in pairs and the pairs of tine plates are set in a helical arrangement in which each pair of tine plates is offset from the adjacent pair of plates on each side thereof. Again, the arrangement of the tine plates 46 on the tube 43 may be different. Optionally, an auger 50 is provided at each end of the drive tube 43 to draw cut crop material inwards from the ends of the pick-up mechanism towards the centre thereof so that it can be fed into the baling chamber 14 by the cutter device 40.

The pick-up mechanism 34 and the cutter device 40 are both driven from a drive chain 52 by a main shaft 44, which is driven from the PTO of the tractor. Alternatively, a different drive mechanism may be provided.

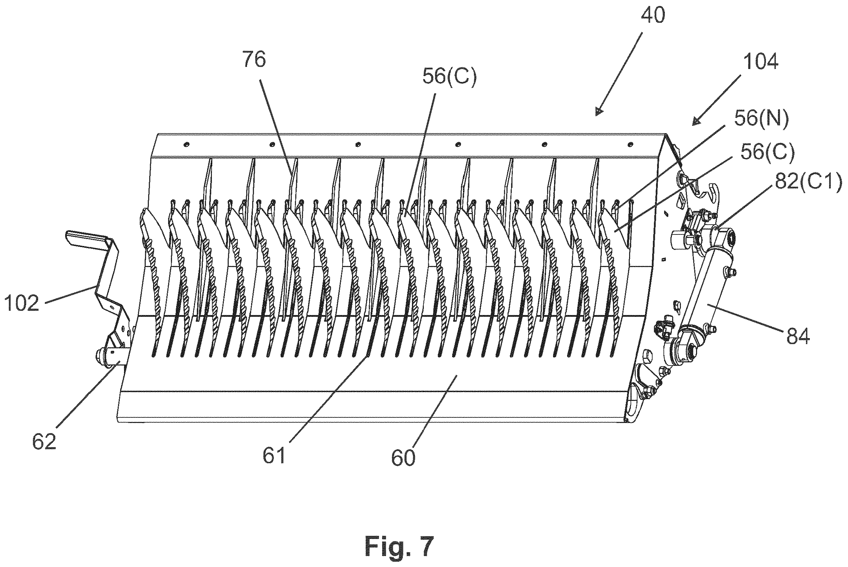

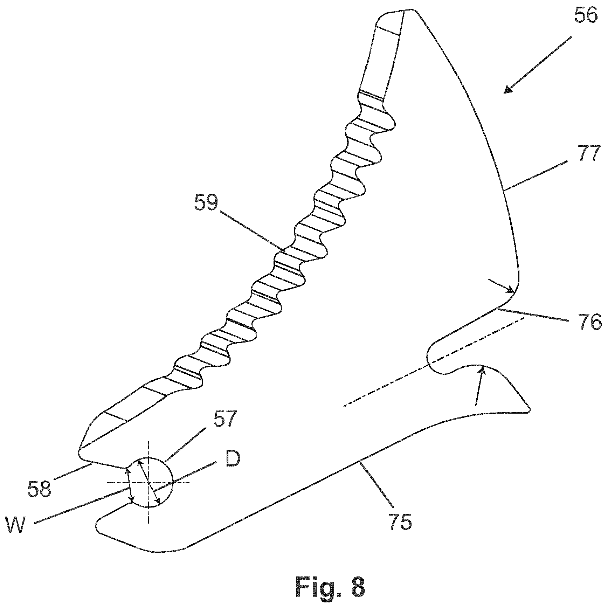

As shown in Figures 2 and 3, a retainer mechanism 54 in the form of a comb is provided above and behind the rotating rotor 42 to remove cut crop material from the rotor after it has passed along the feed path 32. A plurality of knives 56 are provided below and behind the rotating rotor 42 to cut the crop material as it is carried along the feed path 32 by the rotating rotor 42. The knives 56 extend into the feed path 32 through slots 61 in a bottom plate 60 located beneath the rotating rotor 42. More details of the knife 56 and the bottom plate 60 are shown in Figures 7 and 8. Alternatively, the positions of the rotor, the knives and the bottom plate may be inverted, so that the rotor is placed below the plate and the knives (the plate then being referred to as a top plate).

Figure 3 depicts the main components of the cutter unit 40, including the rotor 42, the retainer mechanism 54, the bottom plate 60 and one of the knives 56. The rotor 42 rotates in a rotation direction R and feeds crop material along a feed path 32 between the rotor 42 and the bottom plate 60 in a flow direction F.

The following description of the structure of the knife 56 and the control system for moving the knife 56 is applicable to at least some, and typically each, of the knives 56. The knife 56 is shown in solid lines in a raised cutting position C in which it extends into the feed path 32 through a slot 61 in the bottom plate 60. When the knife 56 is in the cutting position C it cooperates with the tines 48 on the rotating rotor 42 to cut the crop material as it is driven along the feed path 32. In this embodiment the knife 56 extends through the gap between a pair of tines 48 so that the tines pass by on opposite sides of the knife 56 to produce a cutting action. The knife 56 has a cutting edge 59, which may be serrated.

The knife 56 is also shown in broken lines in a non-cutting position N in which it is lowered through the slot 61 so that it lies below the bottom plate 60 and does not extend substantially into the feed path 32. When the knife 56 is in the non-cutting position N it does not significantly come into contact with crop material moving along the feed path 32 and the crop material is therefore fed by the rotating rotor 42 to the baling chamber 14 without being cut.

The knife 56 is approximately triangular-shaped and is pivotable between the cutting position C and the non-cutting position N by pivoting about a knife pivot shaft 62 located towards the front end of the knife 56. The pivot shaft 62 is preferably partially circular in cross section and fits within a circular hole 57 provided at the front end of the knife, allowing rotation of the knife 56 about the pivot shaft 62.

The pivot shaft 62 has a pair of flat faces 64 on opposite sides of the shaft, wherein the distance between the faces 64 is less than the diameter of the pivot shaft 62. The knife 56 includes a shaft slot 58 that preferably extends forwards from the hole 57 to the front end of the knife 56. The minimum width of the shaft slot 57 is greater than the distance between the faces 64, allowing the shaft 62 to pass through the shaft slot 57 when the slot and the faces 64 are aligned. This allows the knife 56 to be attached to and detached from the shaft 62. If the shaft slot 57 is not aligned with the faces 64 of the shaft 62 the knife 56 cannot be detached from the shaft 62.

The pivot shaft 62 and the knife 56 therefore have complementary looking formations comprising the shaft slot 57 and the faces 64 that lock the knife 56 to the pivot shaft 62 in a first configuration and allow separation of the knife from the pivot shaft in a second configuration. The pivot shaft 62 and the knife 56 are adjustable between the first configuration and the second configuration by relative rotation of the knife 56 and the pivot shaft 62. Relative rotation can be achieved by rotating the knife 56 about the pivot shaft 62 and/or by rotating the pivot shaft 62 about its axis.

The knife 56 can be moved between the cutting position C and the non-cutting position N by a positioning device 70. In this employment the positioning device 70 comprises an arm that can be pivoted about a pivot axis 72 located at or near the rear end of the positioning device 70. A first engaging formation 74 is provided at the front end of the positioning device 70, which engages a complementary second engaging formation 76 provided towards the rear end of the knife 56. In this embodiment the first engaging formation 74 comprises a pin and the second engaging formation 76 comprises a slot that opens through the lower rear edge 77 of the knife 56. The slot extends forwards towards the pivot axis of the knife 56, which is defined by the axis of the pivot shaft 62.

The positioning device 70 can be pivoted between a first position P1 in which it positions the knife in the cutting position C and a second position P2 in which it positions the knife in the non-cutting position N. The positioning device 70 can also be moved to a third position P3 below the second position P2, where it can be disengaged from the knife 56 to allow the knife to move independently of the positioning device 70, at least towards the cutting position C. The positioning device 70 is thus configured to engage the knife 56 and prevent significant movement of the knife independently of the positioning device 70 when the positioning device is in the first position P1 and at intermediate positions between the first position P1 and the second position P2. The term "significant movement" as used herein means movement that exceeds normal play between the knife 56 and the positioning device 70.

The knife 56 is therefore positively connected to the positioning device 70 at the first position P1 and at intermediate positions between the first position P1 and the second position P2, so that the knife 56 cannot move significantly without corresponding movement of the positioning device 70. When the positioning device 70 is in the third position P3 it can be disengaged from the knife, which allows free rotation of the knife 56 from the non-cutting position N towards the cutting position C. The term "disengaged" as used herein covers both full disengagement in which the knife 56 can move entirely independently of the positioning device 70, and partial disengagement wherein the knife 56 can move independently of the positioning device 70 from the non-cutting position N towards the cutting position C, but where movement in the opposite direction from the cutting position C towards the non-cutting position N is not entirely free. It is noted that in this embodiment the second and third positions P2 and P3 are adjacent positions. Alternatively, the second and third positions P2 and P3 may coincide.

The positioning device 70 and the complementary engaging formations 74, 76 may take different forms. For example, the positioning device and the knife may have complementary engaging formations that are configured to maintain engagement between the positioning device and the knife in the first position P1 and the second position P2 and all intermediate positions in between the first and the second position, and to permit disengagement of the positioning device from the knife in the third position P3 at least in the direction of movement towards the cutting position. Optionally, the engaging formations 74, 76 may be configured to limit relative movement between the positioning device 70 and the knife 56 in a tangential direction relative to the pivot axis of the knife, and to permit relative movement between the positioning device and the knife in a radial direction relative to the pivot axis of the knife.

The cutter device also includes a control mechanism 80 that controls movement of the positioning device 70 between the first position P1, the second position P2 and the third position P3. The control mechanism 80 includes a control element 82 that is connected to the positioning device 70, and an actuator 84 (shown in Fig. 7) that is connected to the control element 82 and is configured to move the control element between a primary position C1 and a secondary position C2.

In this embodiment the control element 82 comprises a bar that extends transversely across the cutter device 40 substantially parallel to the axis of the rotor 42. The bar is attached by pivot arms 86 to a pivot axis 88, which is preferably located adjacent to, for example just below, the pivot axis 72 of the positioning device 70. The pivot arms 86 pivot about the pivot axis 88, allowing the control element 82 to swing between the primary position C1 that is shown in Figure 3 in solid lines and the secondary position C2 that is shown in broken lines. In this embodiment the primary position C1 comprises a forward position and the secondary position C2 comprises a rearward position.

The control mechanism 80 further comprises a connecting element 90 that is connected to the positioning device 70. In this embodiment the connecting element 90 comprises a resilient connecting element that is configured to enable movement of the positioning device 70 relative to the control element 82 by deformation of the connecting element 90. The resilient connecting element 90 may for example comprise a kink spring, a coil spring or a flat spring. As described below, resilient connecting element 90 provides an overload protection mechanism 91 that allows the knife 56 to move from the cutting position C to the non-cutting position N when subjected to an overload force, for example when an obstruction such as a rock passes along the feed path between the rotor and the knife.

The control mechanism 80 includes a selection mechanism 92. The selection mechanism 92 is arranged to enable alternative connection configurations between the positioning device 70 and the knife 56 to be selected. The connecting element 90 may be connected to the control element 82 by the selection mechanism 92. These alternative connection configurations include a first selection configuration comprising a selected configuration in which the positioning device 70 engages the knife and controls movement of the knife between the cutting position C and the non-cutting position N, and a second selection configuration comprising a de-selected (or non-selected) configuration in which the positioning device 70 allows the knife to return to the non-cutting position N, regardless of the position of the control element 82. In at least some arrangements, when the knife 56 is de-selected by the selection mechanism 92 the positioning device 70 does not fully disengage the knife 56, for example to help facilitate selection of the knife 56 at a later time. In other arrangements, the positioning device 70 fully disengages the knife 56, at least at the third position.

In an embodiment, when a knife 56 is deselected, it is brought first to an intermediate position between the cutting position C and the non-cutting position N, and the positioning device then allows the knife to fall from the intermediate position to the non-cutting position. Typically, the intermediate position is approximately midway between the cutting position C and the non-cutting position N. The intermediate position can be 20%-50% of the total range of movement from the non-cutting position to the cutting position.

The selection mechanism 92 allows a user to select which of the plurality of knives 56 are moved to the cutting position C when the control element 82 moves from the secondary position C2 to the primary position C1. Each de-selected knife 56 is moved to a position that is intermediate between the non-cutting position N and the cutting position C. The knives 56 may return to the non-cutting position N under the force of gravity and/or as a result of being pressed downwards by bale material passing along the feed path 32.

In the embodiment shown in the drawings the selection mechanism 92 comprises a selection element, such as a selection lever 94, and a selection device, such as a selection control 96. The selection lever 94 has a first end 98 that is attached to the connecting element 90 and a free second end 99. The selection lever 94 is attached to the pivot arm 86 through a pivot connection 100 that is located between the first and second ends 98, 99. The selection lever 94 can be pivoted between a first position S1 in which the first end 98 engages the control element 82 and a second position S2 in which the second end 99 engages the control element 82.

In this embodiment the selection control 96 comprises an engagement member in the form of a radial cam surface 97 that can engage the second end 99 of the selection lever 94. The selection control 96 is mounted on a hexagonal bar 96a. The selection control 96 can be rotated to adjust the position of the selection lever 94 between the first position S1 in which the first end 98 engages the control element 82 and an intermediate third position S3 between the first position S1 and the second position S2, in which the first end 98 disengages the control element 82. Subsequent movement of the selection lever 94 between the third position S3 and the second position S2 will be described below. At least some selection controls 96, and typically each selection control 96, is mounted on the same hexagonal bar 96a, and are therefore actuated simultaneously by rotating the hexagonal bar 96a.

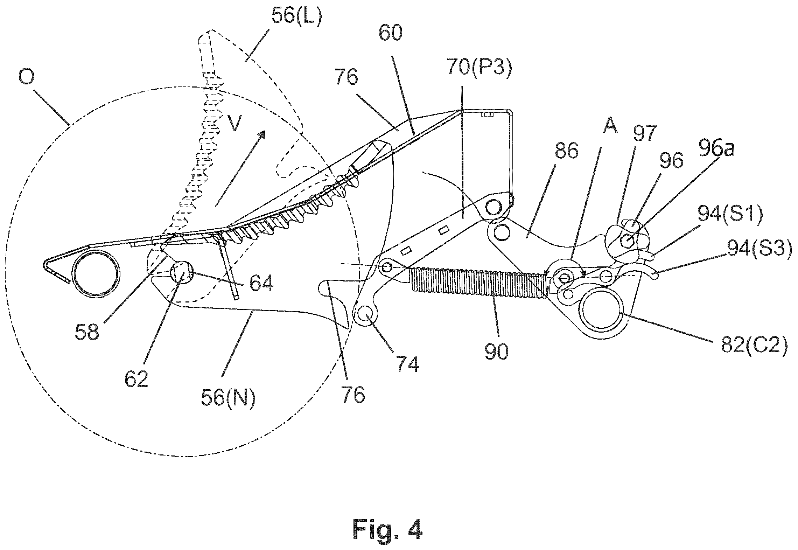

Figure 4 shows the positioning device 70 in the third position P3 in which the first engaging formation 74, e.g. comprising a pin, is withdrawn from the second engaging formation 76 comprising the slot that opens through the rear edge 77 of the knife, so that the positioning device 70 is disengaged from the knife 56. This allows the knife 56 to move independently of the positioning device 70. The knife 56 is shown in solid lines in the non-cutting position N and also in broken lines in the detachment or removal position L, in which the knife is rotated beyond the cutting position C. Owing to the disengagement of the positioning device 70 the knife 56 can be rotated freely, for example by hand, in a circular path O around the pivot shaft 62 from the non-cutting position N to the removal position L.

The pivot shaft 62 can also if necessary be rotated about its axis from a locked configuration shown in solid lines to an unlocked configuration shown in broken lines in which the faces 64 on the sides of the shaft are aligned with the shaft slot 58 of the knife 56. This allows the knife 56 to be removed by pulling it rearwards in a removal direction V. A knife detachment handle 102, for example as shown in figure 7, may optionally be provided for rotating the pivot shaft 62.

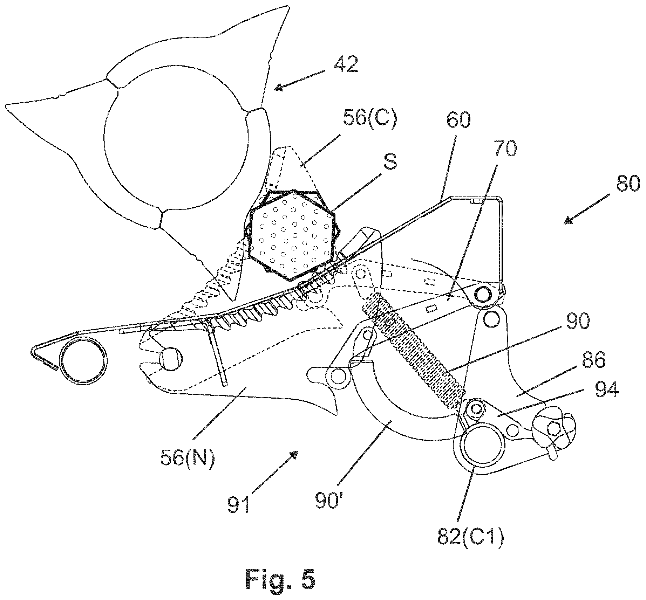

Figure 5 illustrates operation of the overload protection mechanism 91 that allows the knife 56 to move from the cutting position C towards the non-cutting position N when subjected to an overload force, for example when an obstruction S such as a stone or rock passes along the feed path between the rotor 42 and the knife 56.

The control mechanism 80 comprises a connecting element 90 that is connected between the selection lever 94 and the positioning device 70. In this embodiment the connecting element 90 comprises a resilient connecting element, for example a kink spring, a coil spring or a flat spring. The resilient connecting element 90 is configured to enable movement of the positioning device 70 relative to the control element 82 by deformation of the connecting element 90.

For example, if an obstruction S such as a stone or rock passes along the feed path between the rotor 42 and the knife 56, the obstruction may press the knife 56 downwards from the cutting position C as shown in broken lines towards the non-cutting position N shown in solid lines, allowing the obstruction S to pass along the feed path without damaging either the rotor 42 or the knife 56. The force applied by the obstruction S to the knife 56 causes the resilient connecting element 90 to deform elastically, for example by bending. In Fig. 5 the deformed connecting element 90' is shown in solid lines. After the obstruction S has passed, the resilient connecting element 90 resumes its normal undeformed shape as shown in broken lines, thereby returning the knife 56 to the cutting position C.

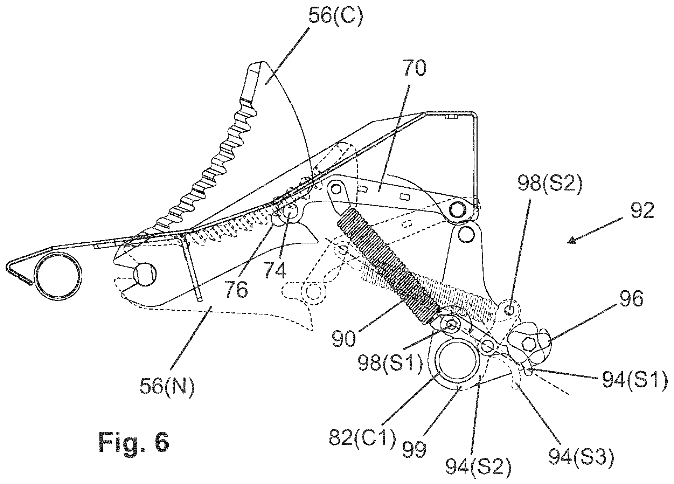

Figure 6 illustrates two different configurations of the selection mechanism 92 with the control element 82 in the secondary position S2. In the first configuration shown in solid lines, the knife 56 is held in the cutting position C by the positioning device 70. The selection lever 94 lies in the first position S1 in which the first end 98 of the selection lever 94 is pressed against the control element 82 by the connecting element 90.

In the second configuration shown in broken lines, the knife 56 is in the non-cutting position and the selection lever 94 is in the second position S2 in which the second end 99 of the selection lever 94 is pressed against the control element 82.

Figure 7 is an isometric view of a base structure 104 of the cutter device, showing upper parts of a first set of knives 56(C) in the cutting position C and a second set of knives 56(N) in the non-cutting position N. In this embodiment the first and second sets of knives alternate along the length of the base structure 104. However, the knives may be arranged in differently in numerous alternative sets. Only the tips of the second set of knives 56(N) can be seen as the knives have been retracted through the slots 61 and are located almost entirely below the bottom plate 60. The first set of knives 56(C) extend through the slots 61 in the bottom plate 60 into the feed path of the bale material. A number of reinforcing plates 76 are attached to the upper surface of the bottom plate 60 to strengthen it and increase its rigidity.

An actuator 84 is connected to the control element 82 and is configured to move the control element between the primary position C1 and the secondary position C2 to move the selected knives 56 between the cutting position C and the non-cutting position N. An optional knife detachment handle 102 is shown removably attached to one end of the pivot shaft 62. The knife detachment handle 102 allows the pivot shaft 62 to be rotated about its axis from the locked configuration to the unlocked configuration, allowing the knife 56 to be removed by pulling it in the removal direction V.

The knife 56 is shown in more detail in Figure 8. The knife 56 is approximately triangular in shape and has a cutting edge 59, which may optionally be serrated, a bottom edge 75 and a rear edge 77. A circular hole 57 is provided at the front end of the knife to receive the pivot shaft 62, allowing the knife 56 to pivot between the cutting position C and the non-cutting position N.

A shaft slot 58 extends from the hole 57 to the edge of the knife 56. In this embodiment the shaft slot 58 extends forwards from the hole 57 to the front end of the knife 56, but it could alternatively extend downwards. The minimum width W of the shaft slot 58 is less than the diameter D of the hole 57 and less than the diameter of the pivot shaft 62, but greater than the distance between the faces 64 of the pivot shaft 62. This allows the shaft 62 to pass through the shaft slot 57 when the slot 58 and the faces 64 are aligned. This enables the knife 56 to be detached from the shaft 62 and attached to the shaft. If the shaft slot 58 is not aligned with the faces 64 of the shaft 62 the knife 56 cannot be detached from the shaft 62.

The knife 56 includes the second engaging formation 76, which engages the first engaging formation 74 of the positioning device 70. The second engaging formation 76 is provided towards the rear end of the knife 56. In this embodiment the second engaging formation 76 comprises a slot that opens through the rear edge 77 of the knife 56 and extends forwards towards the pivot axis of the knife 56, which is defined by the axis of the pivot shaft 62 and the centre of the hole 57. Optionally, the rear edge 77 extends at an angle of at least 60° relative to the bottom plate 60 so that it helps to prevent crop material being drawn into the opening in the bottom plate and helps to remove accumulated dirt from the slot 61 as the knife 56 moves from the cutting position C to the non-cutting position N.

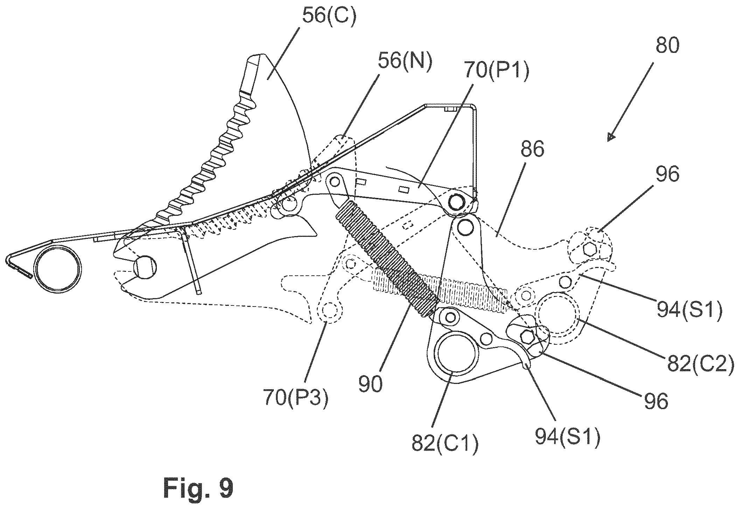

Figures 9 to 13 illustrate movement of the knife 56 and interaction between the knife and the control mechanism 80 as the knife moves between its various positions.

In Figure 9 the knife 56 is shown in solid lines in the cutting position C. The control element 82 is in the primary position C1 and the positioning device 70 is located in the first position P1 in which it is fully engaged with the second engaging formation 76 so that it holds the knife 56 in the cutting position C.

The knife 56 is also shown in broken lines in the non-cutting position N with the control element 82 in the secondary position C2 and the positioning device 70 in the third position P3, in which it is disengaged from the knife 56. Movement of the control element 82 from the secondary position C2 to the primary position C1 will cause the positioning device 70 to engage the second engaging formation 76 and move the knife 56 from the non-cutting position N to the cutting position C. In both configurations the selection device 96 is in the selection position and the selection lever 94 is in the first position S1 in which it is pressed against the control element 82, so that the knife 56 moves with the control element 82 between the cutting position C and the non-cutting position N.

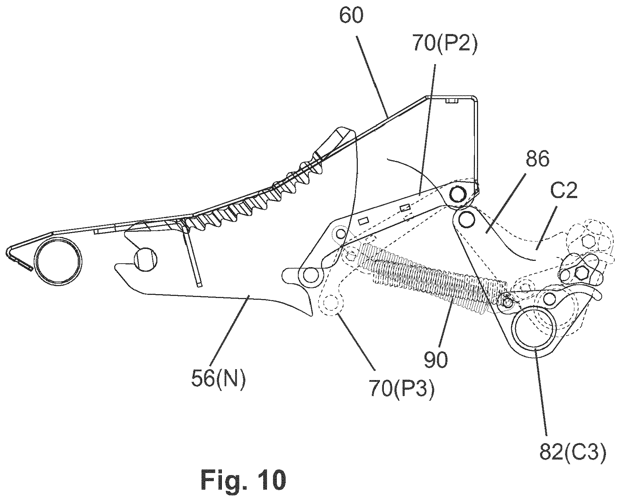

Figure 10 shows the knife 56 in the non-cutting position N. The control element 82 is shown in solid lines in an intermediate position C3 as it moves between the secondary position C2 and the primary position C1. The selection device 96 is in the selection position so that the knife 56 moves with the control element 82. The positioning device 70 is shown in solid lines in the second position P2 in which it is engages with the second engaging formation 76 of the knife 56. The positioning device 70 is also shown in broken lines in the third position P3, in which it is disengaged from the knife 56. As noted above, movement of the control element 82 from the secondary position C2 towards the primary position C1 causes the positioning device 70 to engage the second engaging formation 76 and move the knife 56 from the non-cutting position N towards the cutting position C.

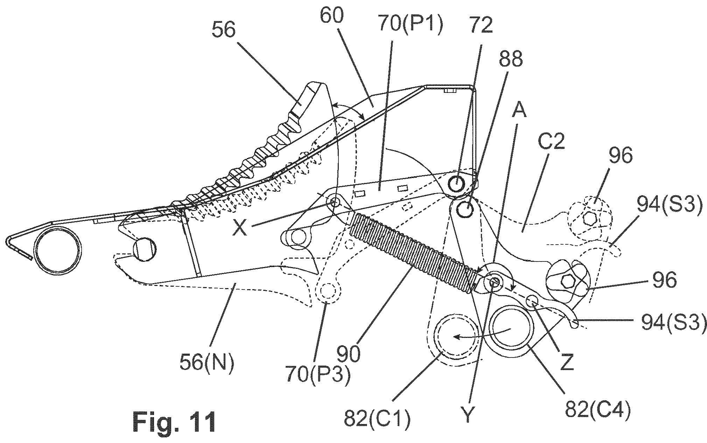

Figures 11 to 13 illustrate a process for deselecting a knife by at least partially disengaging the positioning device 70 so that the knife 56 can move to the non-cutting position N.

As shown in Figure 11, when the control element 82 is in the C2 position shown in broken lines, the selection device 96 is rotated to the de-selection position in which the cam surface 97 pushes the selection lever 94 to the third position S3. The control element 82 then rotates forwards from the secondary position C2 to the primary position C1 through an intermediate position C4 shown in solid lines. In this intermediate position C4 the knife 56 is pushed to an intermediate position between the non-cutting position N and the cutting position C, for example around midway between the cutting position C and the non-cutting position N, which helps to remove any accumulated dirt from the slot 61 in the bottom plate 60.

When the control element 82 reaches the intermediate position C4 shown in solid lines in Fig. 11 the three pivot axes X, Y, Z of the positioning device 70 and the selection lever 94 are aligned. In other words, the angle A is equal to 180°, where A is the angle formed between a line that connects the pivot axes X, Y of the connecting element 90 and a line that connects the pivot axes Y, Z of the selection lever 94. It is noted that the angle A changes as the control element 82 moves from the secondary position C2 to the primary position C1 owing to the fact that the pivot axis 88 of the control element 82 is offset from the pivot axis 72 of the positioning device 70.

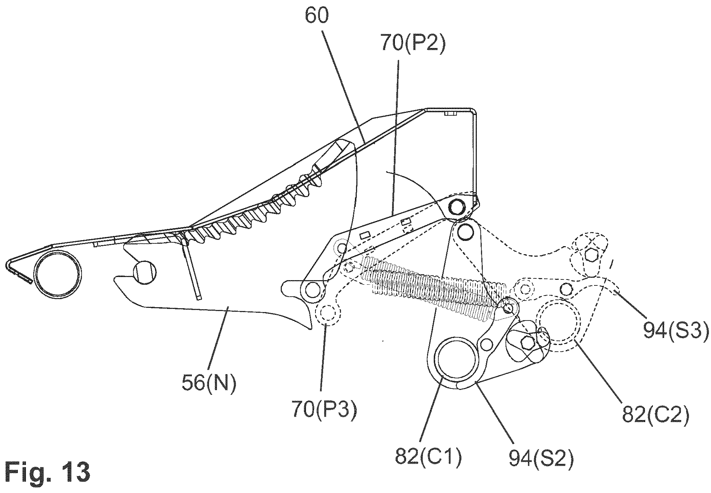

As soon as the control element 82 rotates from the secondary position C2 past the intermediate position C4 towards the primary position C1 that is shown in chain lines in Fig. 11, the angle A increases from less than 180° at C2, to more than 180° between C4 and C1 because the pivot axis 88 of the control element 82 is offset from the pivot axis 72 of the positioning device 70. The compressed connecting element 90 then causes the selection lever 94 to flip over to the second position S2 shown in Fig. 13. As a result, the positioning device 70 is not fully supported anymore allowing the knife 56 to fall or be pressed by bale material towards the non-cutting position N shown in broken lines in Fig. 11.

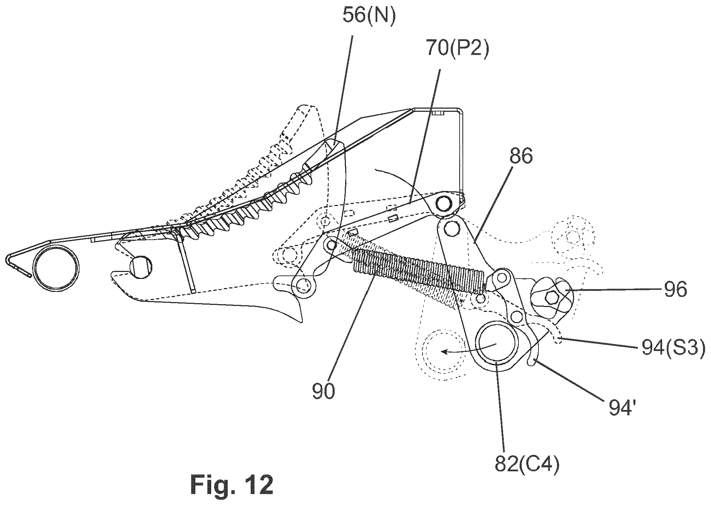

Fig. 12 shows the selection lever 94' in an intermediate position as it flips over from the third position S3 to the second position S2. The positioning device 70 is in position P2 and is no longer supporting the knife 56, allowing the knife 56 to move towards the non-cutting position N.

Fig. 13 shows the selection lever 94 in the second position S2 and the control element 82 in the first position C1. The knife 56 is in the non-cutting position N.

The number of knives 54 that are in the cutting position C at any one time is typically selected according to the harvesting strategy employed by the user. For example, the type of animal that the crop will feed and how much power it is desirable to expend to cut the crop. The greater the number of knives 54, the shorter the length of individual crop pieces. With fewer knives 54 deployed to the cutting positions C there is less intensive cutting and the lengths of the crop stalks will be longer.

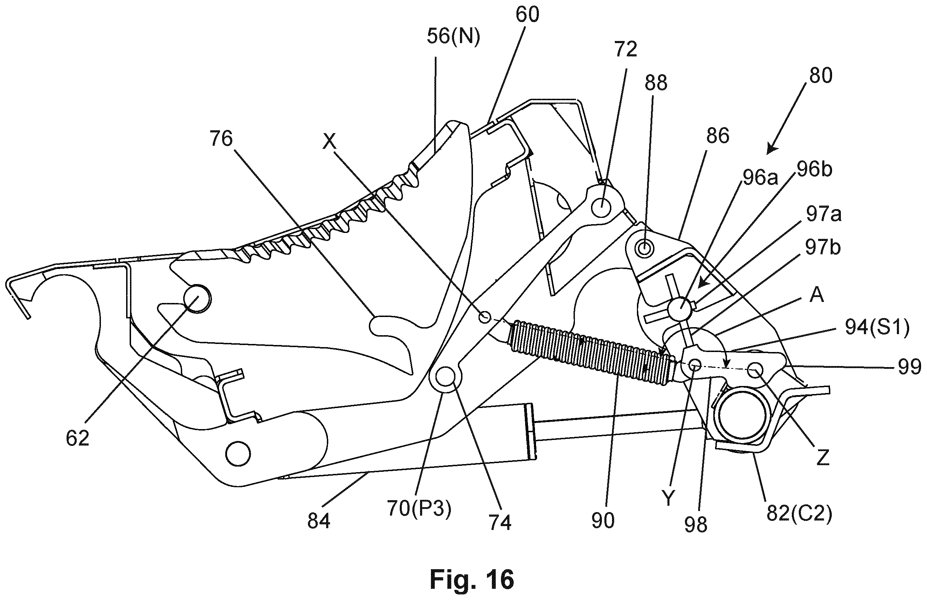

Figures 16 to 18 show a part of a cutter device according to a second embodiment of the invention. The cutter device according to the second embodiment is similar to the first embodiment, except for the differences outlined below. Accordingly, reference numbers used in Figures 16 to 18 to identify features that have a direct equivalent feature in the first embodiment, are the same as those used in the first embodiment.

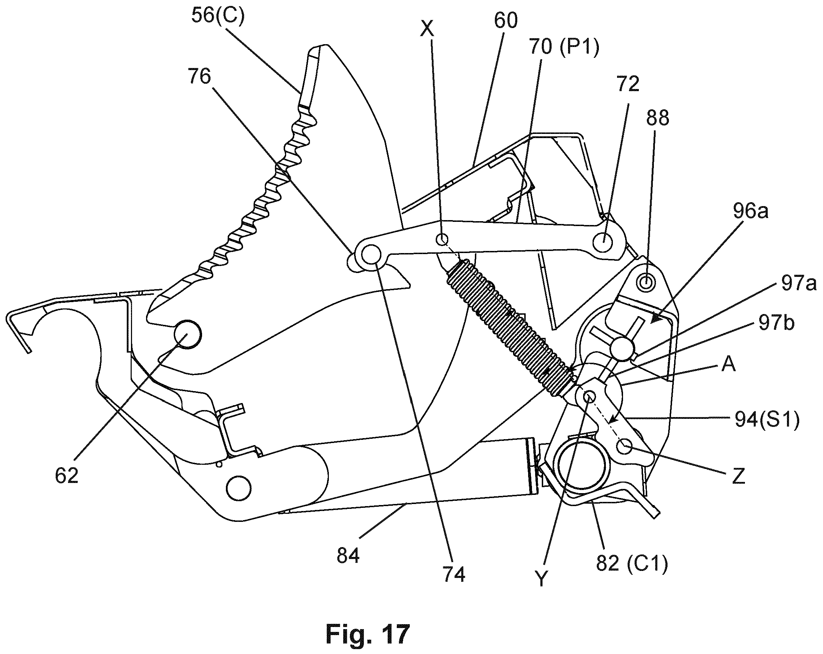

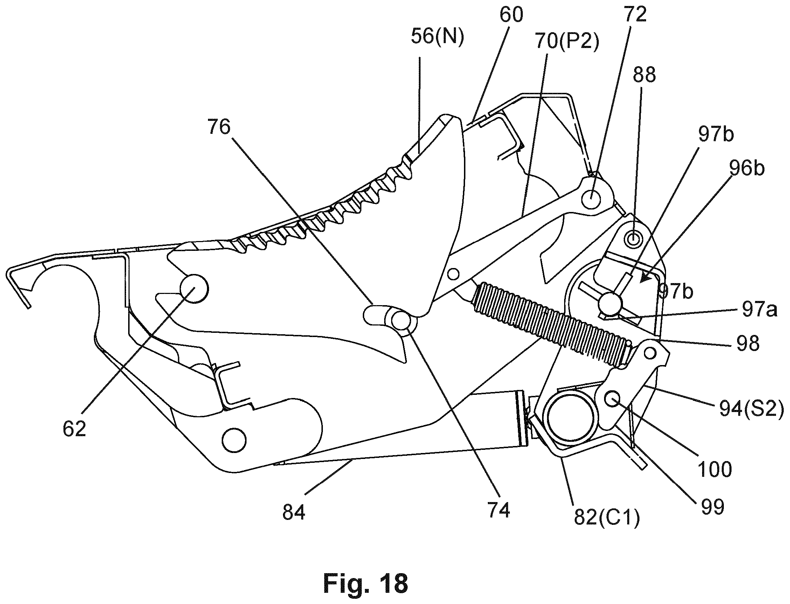

It is apparent from a comparison of Figure 16 and Figure 4 that each selection control 96b in the second embodiment has a different arrangement from the selection controls 96 in the first embodiment. Rather than having a radial cam surface 97 mounted on an axle 96a for a respective knife, in the second embodiment, each selection control 96b comprises a plurality of engagement members in the form of shafts 97 that protrude radially outwards from the axle 96a. In the arrangement shown in Figure 16, the shafts 97 have a generally cruciform arrangement comprising first, second, third and fourth shafts 97. Each of the first, second and third shafts 97 is each arranged to selectively engage the selection element 94 according to the rotational orientation of the axle 96a. When one of the first, second and third shafts 97 engages the selection element adjacent pivot axis Y, the selection element 94 is prevented from flipping over by pivoting about axis 100 as the control element 82 moves from the secondary position C2 to the primary position C1 (see Figures 16 and17) despite being urged to do so by the resilient connecting element 90. That is, the selection element 94 is held in the first operating condition, wherein the knife 56 is selected, while one of the first, second and third engagement shafts 97 engages the selection element 94 adjacent pivot axis Y. The fourth shaft 97a of the cruciform arrangement has a shorter radial length than the first, second and third shafts 97 of the cruciform arrangement. As shown in Figure 18, the shortest shaft 97a is arranged such that when the shortest shaft 97a is generally oriented towards the selection element 94 the shortest shaft 97a does not engage the selection element 94, and therefore does not block the selection element 94 from flipping over as the control element 82 moves from the secondary position C2 to the primary position C1. That is, the selection element 94 is not prevented from rotating about pivot axis Z and deselecting its knife 56 (see Figure 18) when biased to do so by the resilient connecting element 90. In some embodiments, the fourth shaft 97a can be omitted entirely.

In the second embodiment, the pivot axis 72 is spaced further apart from the pivot axis 88 when compared with the distance separating the pivot axes 72,88 in the first embodiment. The geometry of the second embodiment, together with the arrangement of the selection control 96, enables the movements of the selection element 94 and knife 56.

The second embodiment provides a similar bottom plate slot 61 cleaning operation to the first embodiment. When starting at the secondary position C2 all knives 56 and positioning devices 70 proceed upwards towards the cutting position C when control element 82 moves from the secondary position C2 towards the primary position C1 because angle A is less than 180° (see figure 16). When moving towards the primary position C1, the control element 82 passes through an intermediate position C4, wherein each knife 56 (that is both selected and non-selected knives 56) moves to a respective intermediate position between the cutting position C and the non-cutting position N, for example midway between the cutting position C and the non-cutting position N. At the intermediate position C4, the angle A is approximately equal to 180° since the axes of the three pivot points X, Y, Z of the positioning device 70 and the selection element 94 are aligned. As the control element 82 moves further towards the primary position C1, for any non-selected knives 56 (those knives for which the selection control 96 is oriented such that the shorter fourth shaft 97a faces towards the selection element 94,) the selection element 94 rotates about axis Z and flips to the position shown in Figure 18 since the resilient connecting element 90 biases it to do so. In this condition, any force applied to the deselected knives 56 in the direction of the flow of crop material, will cause the deselected knives 56 to fall to the non-cutting position N under the action of gravity. It is apparent that in Figure 18, the angle A is significantly larger than 180°. For each selected knife 56 (each knife 56 wherein its respective selection control 96 has one of the first, second and third shafts 97 engaged with the respective selection element 94), as the control element 84 moves to the primary position C1 and angle A increases above 180°, the selected knives 56 are moved to the cutting position C and are held in the cutting position C as shown in Figure 17 since the selection element 94 is blocked from flipping over by rotating about pivot axis Z despite the resilient connecting member 90 biassing it to do so.

Moving the knives 56 into and out of the slots 61 in the manner described above cleans those slots 61 by dislodging accumulated dirt and crop material in and adjacent to the opening. It will be apparent from the description above that for the second embodiment when the control element 84 moves from the secondary position C2 to the primary position C1, whether the knives 56 are selected or not, all of the knives 56 come to at least the intermediate knife position within their respective slots 61, and therefore all the knives 56 clean their respective slots 61. All selection elements 94 move from an angle A that is less than 180° when the control element is in the secondary position C2 to angle A that is greater than 180° in position C1. Each selection element 94 will flip over in a condition where angle A is greater than 180° unless the selection control 96 prevents it from flipping over. This contrasts with the first embodiment, wherein the angle A is always less than 180° if the selection lever 94 is not selected by the selection control 96 to enable it to flip over.

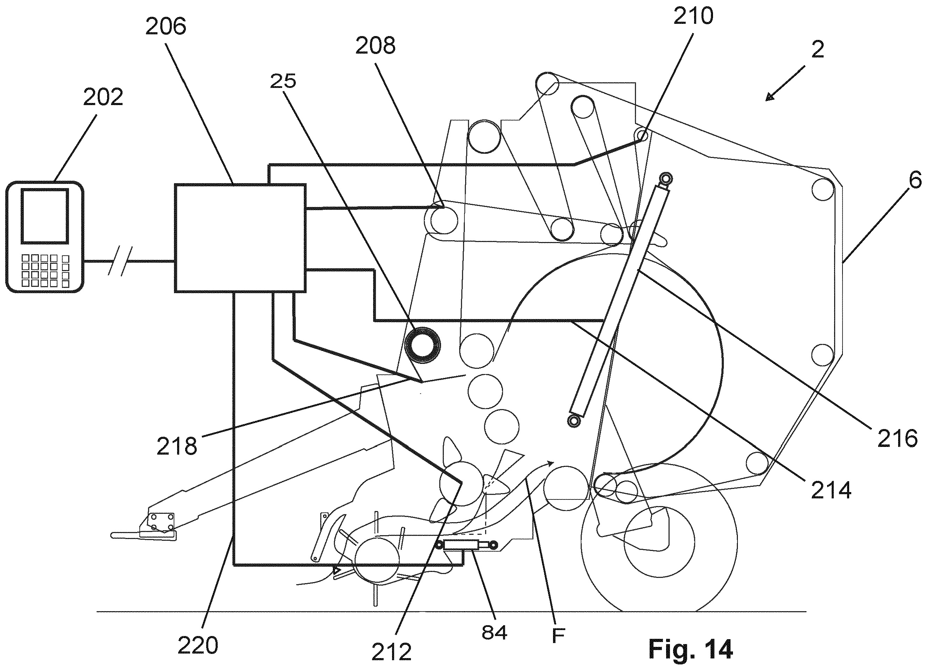

Fig. 14 shows a control system 200 that can be used with each of the first and second embodiments of the invention. The control system 200 includes an input device 202 and a display 204, which are typically located in a tractor. The input device 202 enables the driver of the tractor to control operation of the baler 2 from the tractor, for example by selecting certain modes of operation and setting operating parameters.

The control system 200 includes a baler controller 206, which can include, for example at least one programmable logic controller (PLC). The baler controller 206 is arranged to control operation of the baler. For example, the controller 206 can be arranged to operate the first hydraulic cylinder 84 to actuate the control element. The controller 206 can be arranged to operate the selection mechanism 92. The controller 206 can be arranged to operate the binding device 25.

The control system 200 includes a line 220 that connects the baler controller 206 to the actuator 84. The baler controller 206 is arranged to control operation of the actuator 84 by sending control signals to the actuator 84 via the line 220. For example, when the baler controller 206 determines from the input signals received from the input device 202, or due to any other determination such as those described below, that the position of the control element 82 is to be adjusted, the actuator 84 is configured to move the control element 82 between a primary position C1 and a secondary position C2.

The control system includes a bale size sensor 208 that is arranged to detect the size of the bale B located within the baling chamber 14. The bale size sensor 208 is connected to the baler controller 206, and provides an input signal to the baler controller 206, and the baler controller 206 is able to determine the size of the bale B in the baling chamber 14 according to the signals received from the bale size sensor 208. In some embodiments, the controller 206 is arranged to actuate the control element 84 and/or selection mechanism 96 to undertake a knife cleaning operation in response to signals received from the bale size sensor 208.

The control system includes a tailgate sensor 210 that is arranged to detect the position of the tailgate 6, for example the tailgate sensor 210 can comprise a switch, such as a limit switch. The tailgate sensor 210 is connected to the baler controller 206, and provides an input signal to the baler controller 206, and the baler controller 206 is able to determine the rotational orientation of the tailgate 6 with respect to the fixed part 4a according to the signals received from the tailgate sensor 210. In some embodiments, the controller 206 is arranged to actuate the control element 84 and/or selection mechanism 96 to undertake a knife cleaning operation in response to signals received from the tailgate sensor 210.

The control system includes a crop material sensor 212 that is arranged to detect the flow F of crop material entering the baling chamber 14. The crop material sensor 212 is connected to the baler controller 206, and provides an input signal to the baler controller 206, and the baler controller 206 is able to determine the flow rate of crop material entering the baling chamber 14 according to the signals received from the crop material sensor 212. In some embodiments, the controller 206 is arranged to actuate the control element 84 and/or selection mechanism 96 to undertake a knife cleaning operation in response to signals received from the crop material sensor 212.

The control system 200 includes a line 214 that connects the baler controller 206 to a tailgate cylinder 216. A first end of the tailgate cylinder 216 is connected to the tailgate 6 at a first pivot connection 216a and a second end of the tailgate cylinder 216 is connected to the frame 3 at a second pivot connection 216b. The baler controller 206 is arranged to control operation of the tailgate cylinder 216 to open and close the baler 2 by sending control signals to the tailgate cylinder 216 via the line 214. For example, when the baler controller 206 determines from the input signals received from the bale size sensor 208 that the bale B has reached a threshold size, the baler controller 206 can be arranged to issue a control signal to the tailgate cylinder 216 to automatically open the tailgate 6, to enable the bale B to be ejected from the baling chamber 14. When the baler controller 206 determines that the bale B has been ejected from the baling chamber 14, the baler controller 206 issues a control signal to the tailgate cylinder 216, via line 214, to close the tailgate 6. In some embodiments, the controller 206 is arranged to actuate the control element 84 and/or selection mechanism 96 to undertake a knife cleaning operation in response to determining that the bale has been released from the baling chamber 14.

The control system 200 includes a line 218 that connects the baler controller 206 to the binding device 25. The baler controller 206 is arranged to control operation of the binding device 25 to bind the bale B in the baling chamber 14 by sending control signals to the binding device 25 via the line 218. For example, when the bale controller 206 determines from the input signals received from the bale size sensor 208 that the bale B has reached a threshold size, the baler controller 206 can be arranged to operate the binding device 25 to insert binding material into the baling chamber 14 to bind the bale B. In some embodiments, the controller 206 is arranged to actuate the control element 84 and/or selection mechanism 96 in response to the binding device operating.

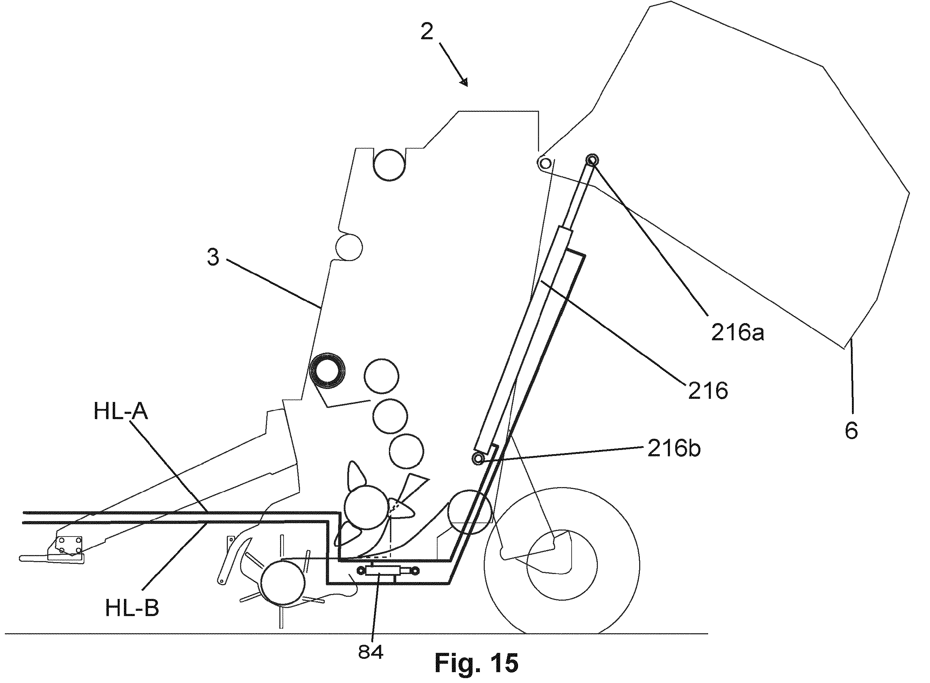

As shown in Fig. 15, the tailgate cylinder 216 is connected to a hydraulic line HL-A and to a hydraulic line HL-B. The actuator 84 is connected to the hydraulic line HL-A and hydraulic line HL-B. When hydraulic line HL-A is pressurised by the tractor, the tailgate 6 is closed and at least some of the knives 56 are moved to the cutting position, that is the control element 82 is moved to the primary position C1 by the actuator 84. When hydraulic line HL-B is pressurised by the tractor, the tailgate 6 is opened and at least some of the knives 56 are moved into the non-working position, that is the control element 82 is moved to the secondary position C2 by the actuator 84.

## Claims

1. A cutter device for an agricultural harvester, comprising:
a rotor (42) with a plurality of tines (36), wherein the rotor (42) is rotatable to transfer an agricultural crop along a feed path (32);
a knife (56), wherein the position of the knife (56) is adjustable;
a bottom plate (60) located beneath the rotor (42), wherein the feed path (32) is located between the rotor (42) and the bottom plate (60), and the bottom plate (60) includes an opening (61) through which the knife (56) extends at least when in a cutting position (C);
a control mechanism (80) including a control element (82) which is movable between at least a primary position (C1) and a secondary position (C2), wherein the control element (82) is arranged to control movement of the knife (56) between
• a first position in which the knife (56) is in a cutting position (C) in the feed path (32),
• a second position in which the knife (56) is substantially out of the feed path (32) in a non-cutting position (N), and
• a third position in which the knife (56) is located at an intermediate position between the cutting position (C) and the non-cutting position (N),
wherein the control mechanism (80) is arranged such that, in a condition wherein the control element (82) is in the secondary position (C2), the knife (56) is in, or may freely move to, the second position of the knife (N),
and wherein the control mechanism (80) includes a selection mechanism (92) that is arranged to select between first and second selection configurations, wherein
• in the first selection configuration, in response to the control element (82) being actuated to move from the secondary position (C2) to the primary position (C1), the control mechanism (80) is arranged to move the knife (56) from the second position (N) to the first position (C), and
• in the second selection configuration, in response to the control element (82) being actuated, the control mechanism (80) is arranged to move the knife (56) from the second position (N) to the third position during movement of the control element (82) from the secondary position (C2) to the primary position (C1), and in a condition wherein the control element (82) reaches the primary position (C1), the knife (56) is freely movable to return to the second position (N) of the knife.

2. The cutter device according to claim 1, including a positioning device (70) arranged to control movement of the knife (56), wherein the control mechanism (80) is arranged to control movement of the positioning device (70), the control element (82) is connected to the positioning device (70), an actuator (84) is configured to move the control element (82) between the primary position (C1) and the secondary position (C2), and the control mechanism (80) includes a connecting element (90) connected to the positioning device (70); and preferably the connecting element (90) comprises a resilient connecting element (90) configured to enable movement of the positioning device (70) relative to the control element (82) by deformation of the resilient element (90).

3. The cutter device according to claim 2, wherein, in response to the control element (82) being actuated to move from the secondary position (C2) to the primary position (C1), thereby moving the knife (56) from the second position (N) to the third position, the resilient connection element (90) is arranged to apply a force to the positioning device (70), throughout movement of the knife (56) from the second position (N) to the third position, that is greater than or equal to the force applied by the resilient connection element (90) to the positioning device (70) immediately after the control element (82) moves from the secondary position (C2).

4. The cutter device according to any one of the preceding claims, wherein the selection device (96) includes a selection element (94) arranged to select between the first selection configuration in which the knife (56) is selected and the second selection configuration in which the knife (56) is deselected, and a selection control (96) arranged to control the selection element (94) to select between the first selection configuration and the second selection configuration.

5. The cutter device according to claim 4, wherein the selection control (96) is arranged to selectively block the selection element (94) from selecting the second selection configuration.

6. The cutter device according to claim 4 or 5, wherein the selection control (96) includes at least one engagement member (97), such as a cam or elongate member, mounted on an axle (96a), wherein rotation of the axle (96a) rotates the engagement member (97), thereby causing the engagement member (97) to selectively engage the selection element (94).

7. The cutter device according to any one of claims 4 to 6, wherein the selection element (94) comprises a selection lever (94).

8. The cutter device according to any one of claims 4 to 7, when dependent on claim 4, wherein the selection element (94) is attached to the resilient element (90) and the control element (82).

9. The cutter device according to any one of claims 2 to 8, wherein the positioning device (70) is attached to a positioning device support by a first pivot having a first pivot axis (72), and is arranged to pivot relative to the positioning device support; and the control element (82) is attached to a control element support by a second pivot having a second pivot axis (88), and is arranged to pivot relative to the control element support.

10. The cutter device of claim 9, wherein the second pivot axis (88) is offset from the first pivot axis (72).

11. The cutter device of claim 9 or 10, when dependent on claims 2 and 4, wherein a linkage comprising the resilient connecting element (90) and the selection element (94) connects the positioning device (70) to the control element (82), wherein the resilient connecting element (90) is pivotally attached to the positioning device (70) by a third pivot having a third pivot axis (X), the resilient connecting element (90) is pivotally attached to the selection element (94) by a fourth pivot having a fourth pivot axis (Y), and the selection element (94) is pivotally attached to the control element (82) by a fifth pivot having a fifth pivot axis (Z).

12. The cutter device according to claim 11, wherein an angle A is defined at the fourth pivot (Y) between a first notional line connecting a centre of the fourth pivot (Y) with a centre of the third pivot (X) and a second notional line connecting the centre of the fourth pivot (Y) with a centre of the fifth pivot (Z), the angle A is located on a side of the resilient connecting element (90) and the selection element (94) that is opposite to the side on which the control element (82) is located, wherein the angle A is adjustable as the resilient connecting element (90) and the selection element (94) pivot relative to one another in response to movement of the control element (82) between the primary and secondary positions (C1,C2).

13. The cutter device according to claim 12, wherein, for the first selection configuration, the angle A is less than 180 degrees, throughout the movement of the control element (82) from the secondary position (C2) to the primary position (C1).

14. The cutter device according to claim 12 or 13, wherein, for the second selection configuration, the angle A is less than 180 degrees in a condition wherein the control element is located at the secondary position, the angle A equals 180 degrees in a condition wherein the control element is located at at least one position that is intermediate between the primary and secondary positions, and the angle A is greater than 180 degrees in a condition wherein the control element is located at the primary position.

15. The cutter device according to claim 12, wherein, the angle A is less than 180 degrees in a condition wherein the control element is located at the secondary position, and the angle A is greater than 180 degrees in a condition wherein the control element is located at the primary position.

16. The cutter device according to claim 12 or 15, wherein, for the first selection configuration, the selection control is arranged to block the selection element from pivoting about the fifth pivot, as the control element moves from the secondary position to the primary position, thereby enabling the knife to move to the cutting position and to be supported in the cutting position.

17. The cutter device according to any one of claims 12, 15 or 16 wherein, for the second selection configuration, the selection control is arranged to allow the selection element to rotate about the fifth pivot, as the control element moves from the secondary position to the primary position, thereby enabling the knife to return to its non-cutting position.

18. The cutter device according to any one of the preceding claims, wherein the agricultural harvester comprises a round baler, the round baler includes a tailgate, a first hydraulic cylinder for actuating the control element, and a second hydraulic cylinder for operating the tailgate; and preferably the first and second hydraulic cylinders are arranged parallel to one another; and/or the first cylinder is operable to adjust the position of the control element in response to the tailgate opening.

19. The cutter device according to any one of the preceding claims, including a controller, such as an electronic controller, arranged to operate the round baler, wherein the controller is arranged to actuate the control element and/or selection mechanism, and preferably the controller is arranged to actuate the control element and/or selection mechanism in response to the controller determining that the bale size has reached a threshold size; and/or the controller is arranged to actuate the control element and/or selection mechanism in response to the controller determining that no crop material is being transported by the cutting rotor towards the baling chamber; and/or the controller is arranged to actuate the control element and/or selection mechanism in response to the controller determining that the tailgate has opened and/or closed; and/or the round baler includes a binding device, and the controller is arranged to actuate the control element and/or selection mechanism in response to the controller determining that the binding device is operational; and/or the controller is arranged to actuate the control element and/or selection mechanism in response to the controller determining the bale has been released from the bale chamber.

20. The cutter device according to any one of the preceding claims, including a plurality of knives, wherein the bottom plate includes a plurality of openings, and a respective one of the knives is arranged to extend into the cutting position through a respective one of the openings; and the control element is arranged to control movement of each knife to adjust the position of each knife between the first, second and third positions; and preferably including: a plurality of positioning devices, wherein each positioning device is arranged to move a respective one of the knives; a plurality of selection elements, wherein each selection element is arranged to select for a respective one of the knives between the first selection configuration and the second selection configuration; a plurality of selection controls, wherein each selection control is arranged to actuate a respective one of the selection elements to select between the first selection configuration and the second selection configuration; and a plurality of resilient connecting elements, wherein each resilient connection element is arranged to enable movement of the respective one of the positioning devices relative to the control element by deformation of the respective resilient connecting element.

## Patentansprüche

1. Eine Schneidevorrichtung für eine landwirtschaftliche Erntemaschine, die Folgendes beinhaltet:
einen Rotor (42) mit einer Vielzahl von Zinken (36), wobei der Rotor (42) rotierbar ist, um eine landwirtschaftliche Nutzpflanze entlang eines Zufuhrpfads (32) zu transferieren;
ein Messer (56), wobei die Position des Messers (56) einstellbar ist;
eine untere Platte (60), die sich unter dem Rotor (42) befindet, wobei sich der Zufuhrpfad (32) zwischen dem Rotor (42) und der unteren Platte (60) befindet und die untere Platte (60) eine Öffnung (61) umfasst, durch die sich das Messer (56) mindestens teilweise erstreckt, wenn in einer Schneideposition (C);
einen Steuermechanismus (80), der ein Steuerelement (82) umfasst, das zwischen mindestens einer primären Position (C1) und einer sekundären Position (C2) bewegbar ist, wobei das Steuerelement (82) eingerichtet ist, um die Bewegung des Messers (56) zwischen
• einer ersten Position, in der sich das Messer (56) in einer Schneideposition (C) in dem Zufuhrpfad (32) befindet,
• einer zweiten Position, in der sich das Messer im Wesentlichen außerhalb des Zufuhrpfads (32) in einer Nicht-Schneideposition (N) befindet, und
• einer dritten Position, in der sich das Messer (56) an einer Zwischenposition zwischen der Schneideposition (C) und der Nicht-Schneideposition (N) befindet, zu steuern,
wobei der Steuermechanismus (80) so eingerichtet ist, dass in einer Bedingung, wobei sich das Steuerelement (82) in der sekundären Position (C2) befindet, sich das Messer (56) in der zweiten Position des Messers (N) befindet oder sich frei in diese bewegen kann,
und wobei der Steuermechanismus (80) einen Auswahlmechanismus (92) umfasst, der eingerichtet ist, um zwischen der ersten und der zweiten Auswahlkonfiguration auszuwählen, wobei
• in der ersten Auswahlkonfiguration als Reaktion darauf, dass das Steuerelement (82) aktiviert wird, um sich von der sekundären Position (C2) in die primäre Position (C1) zu bewegen, der Steuermechanismus (80) eingerichtet ist, um das Messer (56) von der zweiten Position (N) in die erste Position (C) zu bewegen, und
• in der zweiten Auswahlkonfiguration als Reaktion darauf, dass das Steuerelement (82) aktiviert wird, der Steuermechanismus (80) eingerichtet ist, um das Messer (56) während der Bewegung des Steuerelements (82) von der sekundären Position (C2) in die primäre Position (C1) von der zweiten Position (N) in die dritte Position zu bewegen, und unter einer Bedingung, wobei das Steuerelement (82) die primäre Position (C1) erreicht, das Messer (56) frei bewegt werden kann, um in die zweite Position (N) des Messers zurückzukehren.

2. Schneidevorrichtung gemäß Anspruch 1, die eine Positionierungsvorrichtung (70) umfasst, die eingerichtet ist, um die Bewegung des Messers (56) zu steuern, wobei der Steuermechanismus (80) eingerichtet ist, um die Bewegung der Positionierungsvorrichtung (70) zu steuern, wobei das Steuerelement (82) mit der Positionierungsvorrichtung (70) verbunden ist, ein Aktuator (84) konfiguriert ist, um das Steuerelement (82) zwischen der primären Position (C1) und der sekundären Position (C2) zu bewegen, und der Steuermechanismus (80) ein Verbindungselement (90) umfasst, das mit der Positionierungsvorrichtung (70) verbunden ist; und wobei das Verbindungselement (90) vorzugsweise ein widerstandsfähiges Verbindungselement (90) beinhalltet, das konfiguriert ist, um Bewegung der Positionierungsvorrichtung (70) relativ zu dem Steuerelement (82) durch Verformung des widerstandsfähigen Elements (90) zu ermöglichen.

3. Schneidevorrichtung gemäß Anspruch 2, wobei als Reaktion darauf, dass das Steuerelement (82) aktiviert wird, um sich von der sekundären Position (C2) in die primäre Position (C1) zu bewegen, wodurch das Messer (56) von der zweiten Posiion (N) in die dritte Position bewegt wird, das widerstandsfähige Verbindungselement (90) eingerichtet ist, im Laufe der Bewegung des Messers (56) von der zweiten Position (N) in die dritte Position eine Kraft auf die Positionierungsvorrichtung (70) anzuwenden, die größer als oder gleich der Kraft ist, die durch das widerstandsfähige Verbindungselement (90) auf die Positionierungsvorrichtung (70) angewendet wird, unmittelbar nachdem sich das Steuerelement (82) von der sekundären Position (C2) bewegt.

4. Schneidevorrichtung gemäß einem der vorhergehenden Ansprüche, wobei die Auswahlvorrichtung (96) ein Auswahlelement (94) umfasst, das eingerichtet ist, um zwischen der ersten Auswahlkonfiguration, in der das Messer (56) ausgewählt ist, und der zweiten Auswahlkonfiguration, in der das Messer (56) nicht ausgewäht ist, auszuwählen, und eine Auswahlsteuerung (96), die eingerichtet ist, um das Auswahlelement (94) zu steuern, um zwischen der ersten Auswahlkonfiguration und der zweiten Auswahlkonfiguration auszuwählen.

5. Schneidevorrichtung gemäß Anspruch 4, wobei die Auswahlsteuerung (96) eingerichtet ist, um das Auswahlelement (94) selektiv zu blockieren, die zweite Auswahlkonfiguration auszuwählen.

6. Schneidevorrichtung gemäß Anspruch 4 oder 5, wobei die Auswahlsteuerung (96) mindestens ein Eingriffselement (97) wie etwa eine Nocke oder ein längliches Element, das auf einer Achse (96a) montiert ist, umfasst, wobei die Rotation der Achse (96a) das Eingriffselement (97) dreht, wodurch bewirkt wird, dass das Eingriffselement (97) selektiv in das Auswahlelement (94) eingreift.

7. Schneidevorrichtung gemäß einem der Ansprüche 4 bis 6, wobei das Auswahlelement (94) einen Auswahlhebel (94) beinhaltet.

8. Schneidevorrichtung gemäß einem der Ansprüche 4 bis 7, wenn abhängig von Anspruch 4, wobei das Auswahlelement (94) an dem widerstandsfähigen Element (90) und dem Steuerelement (82) befestigt ist.

9. Schneidevorrichtung gemäß einem der Ansprüche 2 bis 8, wobei die Positionierungsvorrichtung (70) durch ein erstes Schwenkelement mit einer ersten Schwenkachse (72) an einer Positionierungsvorrichtungsstütze befestigt ist und eingerichtet ist, um relativ zu der Positionierungsvorrichtungsstütze zu schwenken; und das Steuerelement (82) durch ein zweites Schwenkelement mit einer zweiten Schwenkachse (88) an einer Steuerelementstütze befestigt ist und eingerichtet ist, um relativ zu der Steuerelementstütze zu schwenken.

10. Schneidevorrichtung gemäß Anspruch 9, wobei die zweite Schwenkachse (88) von der ersten Schwenkachse (72) versetzt ist.

11. Schneidevorrichtung gemäß Anspruch 9 oder 10, wenn abhängig von den Ansprüchen 2 und 4, wobei eine Koppelung, die das widerstandsfähige Verbindungselement (90) und das Auswahlelement (94) beinhaltet, die Positionierungsvorrichtung (70) mit dem Steuerelement (82) verbindet, wobei das widerstandsfähige Verbindungselement (90) durch ein drittes Schwenkelement mit einer dritten Schwenkachse (X) an der Positionierungsvorrichtung (70) schwenkbar befestigt ist, das widerstandsfähige Verbindungselement (90) durch ein viertes Schwenkelement mit einer vierten Schwenkachse (Y) an dem Auswahlelement (94) befestigt ist und das Auswahlelement (94) durch ein fünftes Schwenkelement mit einer fünften Schwenkachse (Z) schwenkbar an dem Steuerelement (82) befestigt ist.

12. Schneidevorrichtung gemäß Anspruch 11, wobei ein Winkel A an dem vierten Schwenkelement (Y) zwischen einer ersten angenommenen Linie, die eine Mitte des vierten Schwenkelements (Y) mit einer Mitte des dritten Schwenkelements (X) verbindet, und einer zweiten angenommenen Linie, die die Mitte des vierten Schwenkelements (Y) mit einer Mitte des fünften Schwenkelements (Z) verbindet, definiert ist, wobei sich der Winkel A auf einer Seite des widerstandsfähigen Verbindungselements (90) und des Auswahlelements (94) befindet, die gegenüber der Seite liegt, auf der sich das Steuerelement (82) befindet, wobei der Winkel A einstellbar ist, während das widerstandsfähige Verbindungselement (90) und das Auswahlelement (94) als Reaktion auf Bewegung des Steuerelements (82) relativ zueinander zwischen der primären und der sekundären Position (C1, C2) schwenken.

13. Schneidevorrichtung gemäß Anspruch 12, wobei, für die erste Auswahlkonfiguration, der Winkel A geringer als 180 Grad ist, im Laufe der Bewegung des Steuerelements (82) von der sekundären Position (C") in die primäre Position (C1).

14. Schneidevorrichtung gemäß Anspruch 12 oder 13, wobei, für die zweite Auswahlkonfiguration, der Winkel A geringer als 180 Grad in einem Zustand ist, wobei sich das Steuerelement an der sekundären Position befindet, der Winkel A 180 Grad in einem Zustand entspricht, wobei sich das Steuerelement an mindestens einer Position befindet, die zwischen der primären und der sekundären Position liegt und der Winkel A größer als 180 Grad in einem Zustand ist, wobei sich das Steuerelement an der primären Position befindet.

15. Schneidevorrichtung gemäß Anspruch 12, wobei der Winkel A geringer als 180 Grad in einem Zustand ist, wobei sich das Steuerelement an der sekundären Position befindet, und der Winkel A größer als 180 Grad in einem Zustand ist, wobei sich das Steuerelement an der primären Position befindet.

16. Schneidevorrichtung gemäß Anspruch 12 oder 15, wobei, für die erste Auswahlkonfiguration, die Auswahlsteuerung eingerichtet ist, um das Schwenken des Auswahlelements um das fünfte Schwenkelement zu blockieren, während sich das Steuerelement von der sekundären Position in die primäre Position bewegt, wodurch dem Messer ermöglicht wird, sich in die Schneideposition zu bewegen und in der Scheideposition gestützt zu werden.

17. Schneidevorrichtung gemäß einem der Ansprüche 12, 15 oder 16, wobei, für die zweite Auswahlkonfiguration die Auswahlsteuerung eingerichtet ist, um dem Auswahlelement zu ermöglichen, um das fünfte Schwenkelement zu rotieren, während sich das Steuerelement von der sekundären Position in die primäre Position bewegt, wodurch dem Messer ermöglicht wird, in seine Nicht-Schneideposition zurückzukehren.

18. Schneidevorrichtung gemäß einem der vorhergehenden Ansprüche, wobei die landwirtschaftliche Erntemaschine eine Rundballenpresse beinhaltet, wobei die Rundballenpresse eine Unterklappe, einen ersten hydraulischen Zylinder zum Aktivieren des Steuerelements und einen zweiten hydraulischen Zylinder zum Betreiben der Unterklappe umfasst; und vorzugsweise der erste und der zweite hydraulische Zylinder parallel zueinander eingerichtet sind; und/oder der erste Zylinder betrieben werden kann, um die Position des Steuerelements als Reaktion auf das Öffnen der Unterklappe einzustellen.

19. Schneidevorrichtung gemäß einem der vorhergehenden Ansprüche, die eine Steuerung, wie etwa eine elektronische Steuerung, umfasst, die eingerichtet ist, um die Rundballenpresse zu betreiben, wobei die Steuerung eingerichtet ist, um das Steuerelement und/oder den Auswahlmechanimus zu aktivieren, und die Steuerung vorzugsweise eingerichtet ist, um das Steuerelement und/oder den Auswahlmechnismus als Reaktion darauf zu aktivieren, dass die Steuerung bestimmt, dass die Ballengröße einen Schwellenwert erreicht hat; und/oder die Steuerung eingerichtet ist, um das Steuerelement und/oder den Auswahlmechanismus als Reaktion darauf zu aktivieren, dass die Steuerung bestimmt, dass kein Pflanzenmaterial durch den Schneiderotor zu der Ballenkammer transportiert wird; und/oder die Steuerung eingerichtet ist, um das Steuerelement und/oder den Auswahlmechanismus als Reaktion darauf zu aktivieren, dass die Steuerung bestimmt, dass sich die Unterklappe geöffnet und/oder geschlossen hat; und/oder die Rundballenpresse eine Bindungsvorrichtung umfasst, und die Steuerung eingerichtet ist, um das Steuerelement und/oder den Auswahlmechanismus als Reaktion darauf zu aktivieren, dass die Steuerung bestimmt, dass die Bindungsvorrichtung betriebsfähig ist; und/oder die Steuerung eingerichtet ist, um das Steuerelement und/oder den Auswahlmechanismus als Reaktion darauf zu aktivieren, dass die Steuerung bestimmt, dass der Ballen aus der Ballenkammer freigegeben worden ist.

20. Schneidevorrichtung gemäß einem der vorhergehenden Ansprüche, die eine Vielzahl von Messern umfasst, wobei die untere Platte eine Vielzahl von Öffnungen umfasst, und ein jeweiliges der Messer eingerichtet ist, um sich durch eine jeweilige der Öffnungen in die Schneideposition zu erstrecken; und das Steuerelement eingerichtet ist, um die Bewegung jedes Messers zu steuern, um die Position jedes Messers zwischen der ersten, zweiten und dritten Position einzustellen; und vorzugsweise umfassend: eine Vielzahl von Positionierungsvorrichtungen, wobei jede Positionierungsvorrichtung eingerichtet ist, um ein jeweiliges der Messer zu bewegen; eine Vielzahl von Auswahlelementen, wobei jedes Auswahlelement eingerichtet ist, um für ein jeweiliges der Messer zwischen der ersten Auswahlkonfiguration und der zweiten Auswahlkonfiguration auszuwählen; eine Vielzahl von Auswahlsteuerungen, wobei jede Auswahlsteuerung eingerichtet ist, um ein jeweiliges der Auswahlelemente zu aktivieren, um zwischen der ersten Auswahlkonfiguration und der zweiten Auswahlkonfiguration auszuwählen; und eine Vielzahl von widerstandsfähigen Verbindungselementen, wobei jedes widerstandsfähige Verbindungselement eingerichtet ist, um Bewegung der jeweiligen der Positionierungsvorrichtungen relativ zu dem Steuierelement durch Verformung des jeweiligen elastischen Verbindungselements zu ermöglichen.

## Revendications

1. Un dispositif de coupe pour une moissonneuse agricole, comprenant :
un rotor (42) doté d'une pluralité de dents (36), le rotor (42) pouvant tourner afin de transférer une récolte agricole le long d'une voie d'alimentation (32) ;
un couteau (56), où la position du couteau (56) peut être réglée ;
une plaque de dessous (60) située au-dessous du rotor (42), où la voie d'alimentation (32) est située entre le rotor (42) et la plaque de dessous (60), et la plaque de dessous (60) inclut une ouverture (61) à travers laquelle le couteau (56) s'étend au moins lorsqu'il se trouve dans une position de découpage (C) ;
un mécanisme de commande (80) incluant un élément de commande (82) qui peut être déplacé entre au moins une position primaire (C1) et une position secondaire (C2), où l'élément de commande (82) est conçu pour commander un déplacement du couteau (56) entre
• une première position dans laquelle le couteau (56) est dans une position de découpage (C) dans la voie d'alimentation (32),
• une deuxième position dans laquelle le couteau (56) est substantiellement hors de la voie d'alimentation (32) dans une position de non découpage (N), et
• une troisième position dans laquelle le couteau (56) est situé au niveau d'une position intermédiaire entre la position de découpage (C) et la position de non découpage (N),
où le mécanisme de commande (80) est conçu de telle sorte que, dans une condition où l'élément de commande (82) est dans la position secondaire (C2), le couteau (56) se trouve dans, ou peut se déplacer librement jusqu'à, la deuxième position du couteau (N),
et où le mécanisme de commande (80) inclut un mécanisme de sélection (92) qui est conçu pour sélectionner entre des première et deuxième configurations de sélection, où
• dans la première configuration de sélection, en réponse au fait que l'élément de commande (82) est actionné pour se déplacer de la position secondaire (C2) à la position primaire (C1), le mécanisme de commande (80) est conçu pour déplacer le couteau (56) de la deuxième position (N) à la première position (C), et
• dans la deuxième configuration de sélection, en réponse au fait que l'élément de commande (82) est actionné, le mécanisme de commande (80) est conçu pour déplacer le couteau (56) de la deuxième position (N) à la troisième position pendant un déplacement de l'élément de commande (82) de la position secondaire (C2) à la position primaire (C1), et dans une condition où l'élément de commande (82) atteint la position primaire (C1), le couteau (56) peut se déplacer librement afin de retourner à la deuxième position (N) du couteau.

2. Le dispositif de coupe selon la revendication 1, incluant un dispositif de positionnement (70) conçu pour commander un déplacement du couteau (56), où le mécanisme de commande (80) est conçu pour commander un déplacement du dispositif de positionnement (70), l'élément de commande (82) est raccordé au dispositif de positionnement (70), un actionneur (84) est configuré pour déplacer l'élément de commande (82) entre la position primaire (C1) et la position secondaire (C2), et le mécanisme de commande (80) inclut un élément de raccordement (90) raccordé au dispositif de positionnement (70) ; et de préférence l'élément de raccordement (90) comprend un élément de raccordement élastique (90) configuré pour permettre un déplacement du dispositif de positionnement (70) relativement à l'élément de commande (82) par déformation de l'élément élastique (90).

3. Le dispositif de coupe selon la revendication 2, où, en réponse au fait que l'élément de commande (82) est actionné pour se déplacer de la position secondaire (C2) à la position primaire (C1), déplaçant de ce fait le couteau (56) de la deuxième position (N) à la troisième position, l'élément de raccordement élastique (90) est conçu pour appliquer une force au dispositif de positionnement (70), tout au long du déplacement du couteau (56) de la deuxième position (N) à la troisième position, qui est supérieure ou égale à la force appliquée par l'élément de raccordement élastique (90) au dispositif de positionnement (70) immédiatement après que l'élément de commande (82) se déplace à partir de la position secondaire (C2).

4. Le dispositif de coupe selon n'importe laquelle des revendications précédentes, où le dispositif de sélection (96) inclut un élément de sélection (94) conçu pour sélectionner entre la première configuration de sélection dans laquelle le couteau (56) est sélectionné et la deuxième configuration de sélection dans laquelle le couteau (56) est désélectionné, et une commande de sélection (96) conçue pour commander l'élément de sélection (94) afin de sélectionner entre la première configuration de sélection et la deuxième configuration de sélection.

5. Le dispositif de coupe selon la revendication 4, où la commande de sélection (96) est conçue pour empêcher sélectivement par blocage l'élément de sélection (94) de sélectionner la deuxième configuration de sélection.

6. Le dispositif de coupe selon la revendication 4 ou la revendication 5, où la commande de sélection (96) inclut au moins un organe de mise en prise (97), tel qu'une came ou un organe allongé, monté sur un essieu (96a), où une rotation de l'essieu (96a) fait tourner l'organe de mise en prise (97), amenant de ce fait l'organe de mise en prise (97) à se mettre sélectivement en prise avec l'élément de sélection (94).

7. Le dispositif de coupe selon n'importe laquelle des revendications 4 à 6, où l'élément de sélection (94) comprend un levier de sélection (94).

8. Le dispositif de coupe selon n'importe laquelle des revendications 4 à 7, lorsqu'elle dépend de la revendication 4, où l'élément de sélection (94) est fixé à l'élément élastique (90) et à l'élément de commande (82).

9. Le dispositif de coupe selon n'importe laquelle des revendications 2 à 8, où le dispositif de positionnement (70) est fixé à un support de dispositif de positionnement par un premier pivot ayant un premier axe de pivotement (72), et est conçu pour pivoter relativement au support de dispositif de positionnement ; et l'élément de commande (82) est fixé à un support d'élément de commande par un deuxième pivot ayant un deuxième axe de pivotement (88), et est conçu pour pivoter relativement au support d'élément de commande.

10. Le dispositif de coupe de la revendication 9, où le deuxième axe de pivotement (88) est décalé par rapport au premier axe de pivotement (72).

11. Le dispositif de coupe de la revendication 9 ou de la revendication 10, lorsqu'elles dépendent des revendications 2 et 4, où une liaison comprenant l'élément de raccordement élastique (90) et l'élément de sélection (94) raccorde le dispositif de positionnement (70) à l'élément de commande (82), où l'élément de raccordement élastique (90) est fixé de façon pivotante au dispositif de positionnement (70) par un troisième pivot ayant un troisième axe de pivotement (X), l'élément de raccordement élastique (90) est fixé de façon pivotante à l'élément de sélection (94) par un quatrième pivot ayant un quatrième axe de pivotement (Y), et l'élément de sélection (94) est fixé de façon pivotante à l'élément de commande (82) par un cinquième pivot ayant un cinquième axe de pivotement (Z).

12. Le dispositif de coupe selon la revendication 11, où un angle A est défini au niveau du quatrième pivot (Y) entre une première ligne fictive raccordant un centre du quatrième pivot (Y) à un centre du troisième pivot (X) et une deuxième ligne fictive raccordant le centre du quatrième pivot (Y) à un centre du cinquième pivot (Z), l'angle A est situé sur un côté de l'élément de raccordement élastique (90) et de l'élément de sélection (94) qui est opposé au côté sur lequel l'élément de commande (82) est situé, où l'angle A peut être réglé tandis que l'élément de raccordement élastique (90) et l'élément de sélection (94) pivotent l'un relativement à l'autre en réponse à un déplacement de l'élément de commande (82) entre les positions primaire et secondaire (C1, C2).

13. Le dispositif de coupe selon la revendication 12, où, pour la première configuration de sélection, l'angle A est inférieur à 180 degrés, tout au long du déplacement de l'élément de commande (82) de la position secondaire (C2) à la position primaire (C1).

14. Le dispositif de coupe selon la revendication 12 ou la revendication 13, où, pour la deuxième configuration de sélection, l'angle A est inférieur à 180 degrés dans une condition où l'élément de commande est situé au niveau de la position secondaire, l'angle A est égal à 180 degrés dans une condition où l'élément de commande est situé au niveau d'au moins une position qui est intermédiaire entre les positions primaire et secondaire, et l'angle A est supérieur à 180 degrés dans une condition où l'élément de commande est situé au niveau de la position primaire.

15. Le dispositif de coupe selon la revendication 12, où l'angle A est inférieur à 180 degrés dans une condition où l'élément de commande est situé au niveau de la position secondaire, et l'angle A est supérieur à 180 degrés dans une condition où l'élément de commande est situé au niveau de la position primaire.

16. Le dispositif de coupe selon la revendication 12 ou la revendication 15, où, pour la première configuration de sélection, la commande de sélection est conçue pour empêcher par blocage l'élément de sélection de pivoter autour du cinquième pivot, tandis que l'élément de commande se déplace de la position secondaire à la position primaire, permettant de ce fait au couteau de se déplacer jusqu'à la position de découpage et d'être supporté dans la position de découpage.

17. Le dispositif de coupe selon n'importe laquelle des revendications 12, 15 ou 16 où, pour la deuxième configuration de sélection, la commande de sélection est conçue pour permettre à l'élément de sélection de tourner autour du cinquième pivot, tandis que l'élément de commande se déplace de la position secondaire à la position primaire, permettant de ce fait au couteau de retourner à sa position de non découpage.

18. Le dispositif de coupe selon n'importe laquelle des revendications précédentes, où la moissonneuse agricole comprend une roto-presse, la roto-presse inclut un hayon, un premier cylindre hydraulique pour actionner l'élément de commande, et un deuxième cylindre hydraulique pour faire fonctionner le hayon ; et de préférence les premier et deuxième cylindres hydrauliques sont agencés parallèlement l'un à l'autre ; et/ou le premier cylindre peut être mis en fonctionnement pour régler la position de l'élément de commande en réponse au fait que le hayon s'ouvre.

19. Le dispositif de coupe selon n'importe laquelle des revendications précédentes, incluant une unité de commande, telle qu'une unité de commande électronique, conçue pour faire fonctionner la roto-presse, où l'unité de commande est conçue pour actionner l'élément de commande et/ou le mécanisme de sélection, et de préférence l'unité de commande est conçue pour actionner l'élément de commande et/ou le mécanisme de sélection en réponse au fait que l'unité de commande détermine que la taille de balle a atteint une taille seuil ; et/ou l'unité de commande est conçue pour actionner l'élément de commande et/ou le mécanisme de sélection en réponse au fait que l'unité de commande détermine qu'aucun matériau de récolte n'est transporté par le rotor de découpage vers la chambre de mise en balle ; et/ou l'unité de commande est conçue pour actionner l'élément de commande et/ou le mécanisme de sélection en réponse au fait que l'unité de commande détermine que le hayon s'est ouvert et/ou fermé ; et/ou la roto-presse inclut un dispositif à lier, et l'unité de commande est conçue pour actionner l'élément de commande et/ou le mécanisme de sélection en réponse au fait que l'unité de commande détermine que le dispositif à lier est fonctionnel ; et/ou l'unité de commande est conçue pour actionner l'élément de commande et/ou le mécanisme de sélection en réponse au fait que l'unité de commande détermine que la balle a été libérée de la chambre de balle.

20. Le dispositif de coupe selon n'importe laquelle des revendications précédentes, incluant une pluralité de couteaux, où la plaque de dessous inclut une pluralité d'ouvertures, et un couteau respectif des couteaux est conçu pour s'étendre jusque dans la position de découpage à travers une ouverture respective des ouvertures ; et l'élément de commande est conçu pour commander un déplacement de chaque couteau afin de régler la position de chaque couteau entre les première, deuxième et troisième positions ; et de préférence incluant : une pluralité de dispositifs de positionnement, où chaque dispositif de positionnement est conçu pour déplacer un couteau respectif des couteaux ; une pluralité d'éléments de sélection, où chaque élément de sélection est conçu pour sélectionner, pour un couteau respectif des couteaux, entre la première configuration de sélection et la deuxième configuration de sélection ; une pluralité de commandes de sélection, où chaque commande de sélection est conçue pour actionner un élément de sélection respectif des éléments de sélection afin de sélectionner entre la première configuration de sélection et la deuxième configuration de sélection ; et une pluralité d'éléments de raccordement élastiques, où chaque élément de raccordement élastique est conçu pour permettre un déplacement du dispositif de positionnement respectif des dispositifs de positionnement relativement à l'élément de commande par déformation de l'élément de raccordement élastique respectif.
